(19) Europäisches Patentamt
European Patent Office
Office européen des brevets

(11) **EP 4 293 749 A1**

(12) **EUROPEAN PATENT APPLICATION**
published in accordance with Art. 153(4) EPC

(43) Date of publication:
**20.12.2023  Bulletin 2023/51**

(21) Application number: **22752643.1**

(22) Date of filing: **02.02.2022**

(51) International Patent Classification (IPC):
**H01M 4/36** (2006.01)          **H01M 4/48** (2010.01)
**H01M 4/58** (2010.01)

(52) Cooperative Patent Classification (CPC):
**H01M 4/36; H01M 4/48; H01M 4/58;** Y02E 60/10

(86) International application number:
**PCT/JP2022/003917**

(87) International publication number:
**WO 2022/172815 (18.08.2022 Gazette 2022/33)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority:  **15.02.2021   JP 2021021701**

(71) Applicant: SHIN-ETSU CHEMICAL CO., LTD.
**Tokyo 1000005 (JP)**

(72) Inventors:
• **MATSUNO Takumi**
  **Annaka-shi, Gunma 379-0125 (JP)**
• **HIROSE Takakazu**
  **Annaka-shi, Gunma 379-0125 (JP)**
• **TAKAHASHI Kohta**
  **Annaka-shi, Gunma 379-0125 (JP)**
• **OSAWA Yusuke**
  **Annaka-shi, Gunma 379-0125 (JP)**

(74) Representative: Sonnenhauser, Thomas Martin
**Wuesthoff & Wuesthoff
Patentanwälte PartG mbB
Schweigerstraße 2
81541 München (DE)**

(54) **NEGATIVE ELECTRODE ACTIVE MATERIAL FOR NONAQUEOUS ELECTROLYTE SECONDARY BATTERIES, METHOD FOR PRODUCING SAME, AND NONAQUEOUS ELECTROLYTE SECONDARY BATTERY**

(57)      Provided is a negative electrode active material for a non-aqueous electrolyte secondary battery which contains a negative electrode active material particle. The negative electrode active material particle contains a silicon compound particle containing $Li_2SiO_3$. When measuring the negative electrode active material particle by X-ray diffraction, a half-value width of a peak derived from the $Li_2SiO_3$ (020) plane is in a range from 1.1° to 1.5° inclusive, and formulae (1) to (3) are all satisfied,

$$1.1 \leq Ib/Ia \leq 1.5 \qquad (1)$$

$$I(24.8°)/Ia \leq 0.5 \qquad (2)$$

$$I(28.4°)/Ia \leq 1.0 \qquad (3)$$

where Ia denotes intensity of a peak derived from the $Li_2SiO_3$ (020) plane, Ib denotes intensity of a peak derived from the $Li_2SiO_3$ (111) plane, I(24.8°) denotes intensity at 2θ = 24.8°, and I(28.4°) denotes intensity at 2θ = 28.4°. The negative electrode active material attains high stability in the atmosphere, and, when used as the negative electrode active material for the secondary battery, attains improvement in the initial-stage charge and discharge characteristics.

EP 4 293 749 A1

[FIG. 1]

**Description**

TECHNICAL FIELD

The present invention relates to a negative electrode active material for a non-aqueous electrolyte secondary battery, a method for manufacturing the same, and a non-aqueous electrolyte secondary battery.

BACKGROUND ART

In recent years, small electronic devices represented by mobile terminals have become widespread, and further size reduction, weight reduction, and lifetime extension have been strongly required. For such market requirements, development of a small, lightweight secondary battery that can yield a high energy density is specifically in progress. This secondary battery is investigated to be applied for not only small electronic devices but also large electronic devices represented by automobiles and power storage systems represented by a house.

Among these, a lithium-ion secondary battery is highly promising because the size reduction and increase in a capacity are easily achieved, and it can yield a higher energy density than a lead battery and a nickel-cadmium battery.

The above lithium-ion secondary battery has a positive electrode and a negative electrode, a separator, and an electrolyte liquid. The negative electrode contains a negative electrode active material engaging in charge and discharge reactions.

For this negative electrode active material, a carbon-based active material is widely used, and meanwhile, the recent market has required further improvement of the battery capacity. To improve the battery capacity, investigated is the use of silicon as a material of the negative electrode active material. This is because a theoretical capacity of silicon (4199 mAh/g) is 10 times or more higher than a theoretical capacity of graphite (372 mAh/g), and thereby much improvement of the battery capacity can be expected. With the development of the silicon material as the material of the negative electrode active material, not only silicon single substance but also a compound, etc. represented by an alloy and an oxide are investigated. A shape of the active material is investigated from applying-type, which is a standard for the carbon-based active material, to integrated-type in which the active material is directly deposited on a current collector.

However, using silicon as a main raw material of the negative electrode active material is likely to cause cracking mainly near a surface layer of the negative electrode active material due to expansion and contraction of the negative electrode active material during charge and discharge. In addition, an ionic substance is generated inside the active material, which causes the negative electrode active material to be a substance easily cracked. A cracking of the surface layer of the negative electrode active material generates a new surface to increase a reaction area of the active material. In this time, a decomposition reaction of the electrolyte liquid occurs on the new surface and a coating that is a decomposed product of the electrolyte liquid is formed on the new surface, which consume the electrolyte liquid. Thus, the cycle characteristics are likely to be deteriorated.

To improve initial-stage efficiency and cycle characteristics of the battery, various investigations have been made so far on a negative electrode material mainly containing the silicon material and electrode constitution for a lithium-ion secondary battery.

Specifically, for a purpose of obtaining excellent cycle characteristics and high safety, silicon and amorphous silicon dioxide are simultaneously deposited by using a gas phase method (for example, see Patent Document 1). To obtain a high battery capacity and safety, a carbon material (electron-conducting material) is provided on a surface layer of a silicon oxide particle (for example, see Patent Document 2). Furthermore, to improve the cycle characteristics and to obtain high input and output characteristics, an active material containing silicon and oxygen is prepared to form an active material layer having a high oxygen rate near a current collector (for example, see Patent Document 3). To improve the cycle characteristics, oxygen is contained in a silicon active material to form an active material layer so that an average oxygen content is 40 at% or less and so that an oxygen content is larger near a current collector (for example, see Patent Document 4).

To improve the initial charge and discharge efficiency, a nano-composite having a Si phase, $SiO_2$, and a $M_yO$ metal oxide is used (for example, see Patent Document 5). To improve the cycle characteristics, $SiO_x$ ($0.8 \leq x \leq 1.5$ and particle diameter range = 1 um to 50 um) and a carbon material are mixed to be sintered at a high temperature (for example, see Patent Document 6). To improve the cycle characteristics, a mole ratio of oxygen to silicon in a negative electrode active material is set to 0.1 to 1.2, and the active material is regulated within a range that a difference of maximum value and minimum value in the mole ratio near an interface between the active material and a current collector is 0.4 or less (for example, see Patent Document 7). To improve battery load characteristics, a metal oxide containing lithium is used (for example, see Patent Document 8). To improve the cycle characteristics, a hydrophobic layer such as a silane compound is formed on a surface layer of a silicon material (for example, see Patent Document 9).

To improve the cycle characteristics, silicon oxide is used and a graphite coating is formed on a surface layer of the silicon oxide to impart conductivity (for example, see Patent Document 10). In Patent Document 10, concerning a shift value obtained by a RAMAN spectrum corresponding to the graphite coating, broad peaks appear at 1330 cm$^{-1}$ and 1580 cm$^{-1}$, and an intensity ratio thereof $I_{1330}/I_{1580}$ is $1.5 < I_{1330}/I_{1580} < 3$. To achieve the high battery capacity and to improve the cycle characteristics, a particle having a silicon fine crystal phase dispersed in silicon dioxide is used (for example, see Patent Document 11). To improve overcharge-overdischarge characteristics, a silicon oxide in which an atomic ratio between silicon and oxygen is regulated to 1:y (0 < y < 2) is used (for example, see Patent Document 12).

CITATION LIST

PATENT LITERATURE

Patent Document 1: JP 2001-185127 A
Patent Document 2: JP 2002-042806 A
Patent Document 3: JP 2006-164954 A
Patent Document 4: JP 2006-114454 A
Patent Document 5: JP 2009-070825 A
Patent Document 6: JP 2008-282819 A
Patent Document 7: JP 2008-251369 A
Patent Document 8: JP 2008-177346 A
Patent Document 9: JP 2007-234255 A
Patent Document 10: JP 2009-212074 A
Patent Document 11: JP 2009-205950 A
Patent Document 12: JP H06-325765 A

SUMMARY OF INVENTION

TECHNICAL PROBLEM

As noted above, in recent years, improvement of performance and higher functionalization of small electronic devices represented by mobile terminals are in progress, and a lithium-ion secondary battery, which is a main power source therefor, is required to have an increased battery capacity. Desired as one method to solve this problem is development of a lithium-ion secondary battery having a negative electrode using a silicon material as a main material.

The use of the silicon material doped with Li allows high initial-stage efficiency and capacity maintenance rate. On the other hand, however, the silicon material doped with Li causes the problem of deteriorating stability in the atmosphere. Especially, the silicon material doped with high content of Li for obtaining high initial-stage efficiency significantly deteriorates stability, which has to be handled in the low-humidity atmosphere or the inert gas atmosphere. Accordingly, such silicon material is not suitable for industrial use.

The present invention has been made in view of the problem as described above. It is an object of the present invention to provide a negative electrode active material with high stability in the atmosphere, which improves initial-stage charge and discharge characteristics when used for the secondary battery, and to provide a non-aqueous electrolyte secondary battery which contains such negative electrode active material. It is another object of the present invention to provide a method for manufacturing the negative electrode active material which has high stability in the atmosphere and allows improvement in the initial-stage charge and discharge characteristics.

SOLUTION TO PROBLEM

To achieve the object, the present invention provides a negative electrode active material for a non-aqueous electrolyte secondary battery. The negative electrode active material contains a negative electrode active material particle. The negative electrode active material particle contains a silicon compound particle containing a silicon compound ($SiO_x$: $0.8 \leq x \leq 1.2$). The silicon compound particle contains $Li_2SiO_3$. When measuring the negative electrode active material particle by X-ray diffraction using Cu-K$\alpha$ radiation, a half-value width of a peak derived from a $Li_2SiO_3$ (020) plane, obtained by the X-ray diffraction is in a range from 1.1° to 1.5° inclusive. A spectrum obtained by the X-ray diffraction satisfies all formulae (1) to (3),

$$1.1 \leq Ib/Ia \leq 1.5 \qquad (1)$$

$$I(24.8°)/Ia \leq 0.5 \qquad (2)$$

$$I(28.4°)/Ia \leq 1.0 \qquad (3)$$

where Ia denotes intensity of a peak derived from the $Li_2SiO_3$ (020) plane, Ib denotes intensity of a peak derived from a $Li_2SiO_3$ (111) plane, $1(24.8°)$ denotes intensity at $2\theta = 24.8°$, and $1(28.4°)$ denotes intensity at $2\Theta = 28.4°$.

As the inventive negative electrode active material (referred to as a silicon-based active material) contains the negative electrode active material particle (referred to as the silicon-based active material particle) containing the silicon compound particle, the battery capacity can be improved. As the silicon compound particle contains $Li_2SiO_3$, an irreversible capacity caused in charging can be reduced. This makes it possible to improve the initial-stage efficiency. The spectrum obtained by the X-ray diffraction has the half-value width of the peak derived from the $Li_2SiO_3$ (020) plane in the range from 1.1° to 1.5° inclusive, and satisfies all formulae (1) to (3). Accordingly, it is possible to improve both the initial-stage efficiency and stability in the atmosphere.

In this case, preferably, the spectrum obtained by the X-ray diffraction does not have a peak derived from $Li_2Si_2O_5$ at around $2\theta = 24.8°$.

The low ratio of crystalline $Li_2Si_2O_5$ in the negative electrode active material can yield higher initial-stage efficiency.

Preferably, the spectrum obtained by the X-ray diffraction does not have a peak derived from a Si (111) plane at around $2\Theta = 28.4°$.

The low ratio of the crystalline Si in the negative electrode active material suppresses the lithium dispersion to the surface during storage in the atmosphere by restraining formation of lithium silicide in the Li doping process. Accordingly, stability in the atmosphere can be further enhanced.

Preferably, the spectrum obtained by the X-ray diffraction satisfies a formula of $1.2 \leq Ib/Ia \leq 1.3$.

The spectrum obtained by the X-ray diffraction within the range as above indicates that an appropriate amount of lithium is contained in the silicon compound particle, and $Li_2SiO_3$ exhibits appropriate crystallinity. This makes it possible to further enhance stability in the atmosphere by suppressing the lithium diffusion to the surface during storage in the atmosphere.

Preferably, the half-value width of the peak derived from the $Li_2SiO_3$ (020) plane is in a range from 1.2° to 1.3° inclusive.

The half-value width within the range as above indicates that the crystallite size of $Li_2SiO_3$ is within an appropriate range. This makes it possible to further enhance stability in the atmosphere.

Preferably, intensity $1(29.9°)$ of the spectrum obtained by the X-ray diffraction, derived from $LiOH \cdot H_2O$ at $2\Theta = 29.9°$ satisfies a formula of $I(29.9°)/Ia \leq 0.7$.

The intensity ratio within the range as above allows suppression of absorption of moisture and a carbon acid from the atmosphere by restraining an amount of $LiOH \cdot H_2O$ on the surface of the negative electrode active material particle to be within an appropriate range. This makes it possible to further enhance stability in the atmosphere.

Preferably, the spectrum obtained by the X-ray diffraction does not have a peak derived from the $LiOH \cdot H_2O$ at around $2\Theta = 29.9°$.

The negative electrode active material containing no $LiOH \cdot H_2O$ allows further enhancement of stability in the atmosphere by suppressing absorption of the moisture and the carbon acid from the atmosphere.

Preferably, intensity $1(31.7°)$ of the spectrum obtained by the X-ray diffraction at $2\Theta = 31.7°$ satisfies a formula of $I(31.7°)/Ia \leq 0.7$.

The intensity ratio within the range as above attains appropriate amount of lithium carbonate contained in the surface of the negative electrode active material particle. This makes it possible to further enhance stability in the atmosphere by suppressing moisture from the atmosphere.

Preferably, a content of silicon in 25°C water in which the negative electrode active material particle has been dispersed at a rate of 10 mass% for one hour is equal to or less than 50 mass ppm.

Making the silicon content within the range as above can suppress elution of the silicon compound with binding property in the atmosphere to the surface. This makes it possible to suppress agglomeration of the negative electrode active material particle.

Preferably, a BET specific surface area of the negative electrode active material particle is in a range from 1 $m^2/g$ to 3 $m^2/g$ inclusive.

Making the BET specific surface area within the range as above allows further improvement in both the initial efficiency and stability in the atmosphere.

Preferably, a median diameter (D50) of the negative electrode active material particle is in a range from 4.0 um to 15 um inclusive, and a ratio (D90/D10) between 10% accumulation diameter (D10) and 90% accumulation diameter (D90) is equal to or lower than 3.

Making the median diameter and the ratio within the respective ranges as above allows the negative electrode active material particle to have an appropriate particle size, resulting in uniform lithium doping. This makes it possible to further improve both the initial efficiency and stability in the atmosphere.

Preferably, a surface layer of the negative electrode active material particle contains a carbon material, and an average thickness of the carbon material is in a range from 10 nm to 100 nm inclusive.

As the surface layer of the negative electrode active material contains the carbon material, electron conductivity can be enhanced to improve battery characteristics. Enhanced hydrophobicity on the surface suppresses absorption of moisture from the atmosphere. The average thickness of the carbon material within the range as described above enhances the electron conductivity while holding the lithium-ion conductivity. This makes it possible to further improve both the initial efficiency and stability in the atmosphere.

Preferably, the surface layer of the negative electrode active material particle contains a phosphate.

As the surface layer of the negative electrode active material contains the phosphate, the lithium diffused over the surface during storage in the atmosphere is trapped to suppress elution of the lithium from the inside of the active material particle. This makes it possible to further enhance stability in the atmosphere.

The present invention provides a non-aqueous electrolyte secondary battery which contains the negative electrode active material for the non-aqueous electrolyte secondary battery.

The non-aqueous electrolyte secondary battery as above allows the negative electrode active material particles to be highly stabilized in the atmosphere. This results in higher degree of freedom in the manufacturing process, which is suitable for industrial use. The negative electrode prepared using the negative electrode active material particle as above allows the secondary battery to yield high capacity and excellent initial-stage charge and discharge characteristics.

The present invention provides a method for manufacturing a negative electrode active material for a non-aqueous electrolyte secondary battery. The negative electrode active material contains a negative electrode active material particle which contains a silicon compound particle. The method includes steps of: preparing the silicon compound particle containing a silicon compound (SiOx: $0.8 \leq x \leq 1.2$), and inserting Li into the silicon compound particle to allow the silicon compound particle to contain $Li_2SiO_3$. The negative electrode active material particle is prepared by these steps. When measuring the negative electrode active material particle by X-ray diffraction using Cu-Kα radiation, a half-value width of a peak derived from a $Li_2SiO_3$ (020) plane obtained by the X-ray diffraction is in a range from 1.1° to 1.5° inclusive. The method further includes a step of selecting the negative electrode active material particle which has a spectrum obtained by the X-ray diffraction satisfying all formulae (1) to (3),

$$1.1 \leq Ib/Ia \leq 1.5 \qquad (1)$$

$$I(24.8°)/Ia \leq 0.5 \qquad (2)$$

$$I(28.4°)/Ia \leq 1.0 \qquad (3)$$

where Ia denotes intensity of a peak derived from a $Li_2SiO_3$ (020) plane, Ib denotes intensity of a peak derived from a $Li_2SiO_3$ (111) plane, $I(24.8°)$ denotes intensity at $2\theta = 24.8°$, and $I(28.4°)$ denotes intensity at $2\Theta = 28.4°$. The selected negative electrode active material particle is used for manufacturing the negative electrode active material for a non-aqueous electrolyte secondary battery.

The negative electrode active material is manufactured so that the spectrum obtained by the X-ray diffraction for measuring the negative electrode active material particle containing the silicon compound particle inserted with Li has the half-value width of the peak derived from the $Li_2SiO_3$ (020) plane in the range from 1.1° to 1.5° inclusive, and satisfies the formulae (1) to (3). This makes it possible to enhance stability of the negative electrode active material in the atmosphere. The use of the negative electrode active material for the secondary battery can yield excellent cycle characteristics, and initial-stage charge and discharge characteristics as well as high capacity.

ADVANTAGEOUS EFFECTS OF INVENTION

The inventive negative electrode active material for a non-aqueous electrolyte secondary battery is highly stabilized in the atmosphere, and yields high capacity and excellent initial-stage charge and discharge characteristics when used for the secondary battery. The secondary battery prepared by using the inventive negative electrode active material yields high capacity and excellent initial-stage charge and discharge characteristics. The inventive method for manufacturing a negative electrode active material for a non-aqueous electrolyte secondary battery can enhance stability of the negative electrode active material particle in the atmosphere, and in addition, have excellent initial-stage charge and discharge characteristics when used for the non-aqueous electrolyte secondary battery.

BRIEF DESCRIPTION OF DRAWINGS

FIG. 1 shows an example of a spectrum of the inventive negative electrode active material, obtained by the X-ray diffraction using Cu-K$\alpha$ radiation.

FIG. 2 is a sectional view illustrating a constitution example of a negative electrode for a non-aqueous electrolytic secondary battery containing the inventive negative electrode active material.

FIG. 3 is an exploded view illustrating a constitution example of a (laminated-film-type) lithium-ion secondary battery containing the inventive negative electrode active material.

DESCRIPTION OF EMBODIMENTS

Hereinafter, the present invention will be described referring to an embodiment. The present invention, however, is not limited to the embodiment.

As described above, investigated as one method for increasing the battery capacity of the lithium-ion secondary battery is the use of a negative electrode using a silicon material as a main material. To obtain initial-stage charge and discharge characteristics and cycle characteristics approximately equivalent to those of a lithium-ion secondary battery using a carbon-based active material, initial-stage charge and discharge characteristics of the silicon material needs to be enhanced. A Li-doped silicon material can improve the initial-stage charge and discharge characteristics, but deteriorates stability in the atmosphere. Accordingly, it is regarded as unsuitable for the industrial use. Therefore, no negative electrode active material has reached proposal to be suitable for the industrial use, and exhibit the initial-stage charge and discharge characteristics equivalent to those of the lithium-ion secondary battery using the carbon-based active material.

The present inventors have made earnest study to obtain a negative electrode active material that can attain high stability in the atmosphere, and yield, when used for the secondary battery, high battery capacity and excellent initial efficiency.

[Inventive Negative Electrode Active Material for Non-Aqueous Electrolyte Secondary Battery]

The inventive negative electrode active material for a non-aqueous electrolyte secondary battery contains a negative electrode active material particle. The negative electrode active material particle contains a silicon compound particle containing a silicon compound ($SiO_x$: $0.8 \leq x \leq 1.2$). The silicon compound particle contains $Li_2SiO_3$ as a lithium silicate. The inventive negative electrode active material contains the negative electrode active material particle containing a silicon compound particle. Accordingly, the battery capacity can be improved. As the silicon compound particle contains the lithium silicate, an irreversible capacity generated during charging can be lowered. As a result, it is possible to improve the battery capacity of the secondary battery, the cycle characteristics, and the initial charge and discharge efficiency.

When measuring the negative electrode active material particle of the inventive negative electrode active material for the non-aqueous electrolyte secondary battery by X-ray diffraction using Cu-K$\alpha$ radiation, the half-value width of the peak derived from the $Li_2SiO_3$ (020) plane, obtained by the X-ray diffraction is in the range from $1.1°$ to $1.5°$ inclusive. The spectrum obtained by the X-ray diffraction satisfies all formulae (1) to (3),

$$1.1 \leq Ib/Ia \leq 1.5 \qquad (1)$$

$$I(24.8°)/Ia \leq 0.5 \qquad (2)$$

$$I(28.4°)/Ia \leq 1.0 \qquad (3)$$

where Ia denotes intensity of the peak derived from the $Li_2SiO_3$ (020) plane, Ib denotes intensity of the peak derived from the $Li_2SiO_3$ (111) plane, $I(24.8°)$ denotes intensity at $2\Theta = 24.8°$, and $I(28.4°)$ denotes intensity at $2\Theta = 28.4°$. As a result, both the initial-stage efficiency and stability in the atmosphere can be improved.

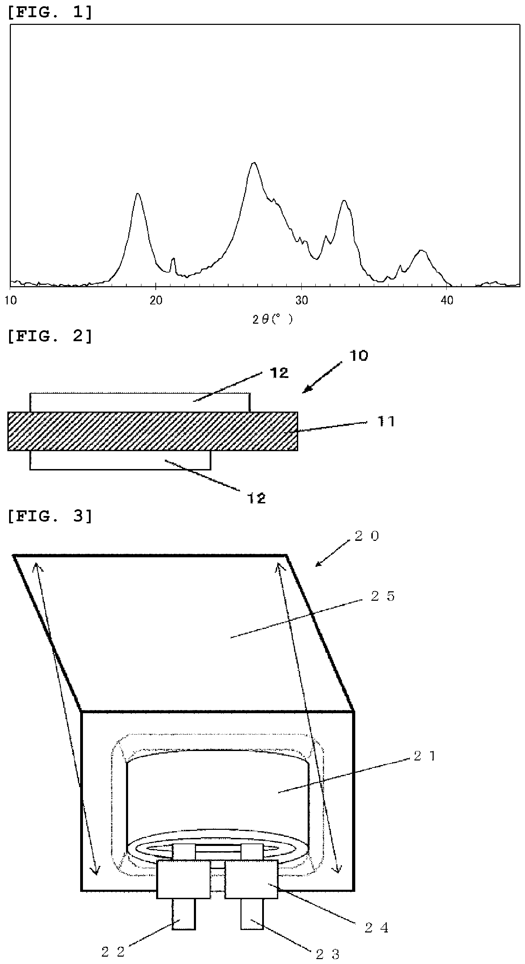

FIG. 1 shows an example of a spectrum of the inventive negative electrode active material for a non-aqueous electrolyte secondary battery, obtained by the X-ray diffraction using Cu-K$\alpha$ radiation. The peak derived from the $Li_2SiO_3$ (020) plane generally appears at around $2\Theta = 18.7°$, and the peak derived from the $Li_2SiO_3$ (111) plane generally appears at around $2\Theta = 26.7°$.

Each specification based on the X-ray diffraction spectrum of the inventive negative electrode active material has technical significance as described below.

The half-value width of the peak derived from the $Li_2SiO_3$ (020) plane is in the range from 1.1° to 1.5° inclusive. This indicates that the lithium silicate with appropriate crystallinity is formed in the silicon-based active material particle. The half-value width of the peak derived from the $Li_2SiO_3$ (020) plane, which is smaller than 1.1° indicates excessive advancement of a crystal growth. Accordingly, the lithium diffusibility during battery charge and discharge is lowered, deteriorating the initial-stage efficiency. The half-value width of the peak derived from the $Li_2SiO_3$ (020) plane, which is larger than 1.5° indicates low crystallinity. This makes air moisture or carbonic acid easily absorbed, thus deteriorating stability in the atmosphere.

Satisfaction of the formula (1) indicates that the lithium doping amount to the silicon-based active material particle is appropriate, and the lithium silicate with appropriate cristallity has been formed. Accordingly, it is possible to improve both the initial-stage efficiency and stability in the atmosphere. A formula Ib/Ia < 1.1 indicates that the lithium doping amount is excessive, and the crystal growth of the lithium silicate has been excessively advanced. Accordingly, excellent stability in the atmosphere cannot be obtained. A formula 1.5 < Ib/Ia indicates that the lithium doping amount to the silicon-based active material particle is small. Accordingly, sufficient initial efficiency cannot be obtained.

The peak intensity Ia is obtained as intensity of a peak derived from the $Li_2SiO_3$ (020) crystal plane. Meanwhile, the peak intensity Ib is obtained as a result of superposing a broad peak of SiOx to the peak derived from the $Li_2SiO_3$ (111) crystal plane. As the large lithium doping amount lowers the broad peak intensity of SiOx, the ratio Ib/Ia becomes lower. As advancement of the crystal growth of the lithium silicate restrains the contribution of SiOx broad peak in the Ib peak, the ratio Ib/Ia becomes small. Based on the relations, the range of the ratio Ib/Ia may be specified as the parameter which defines each proper range of the doping amount and crystallinity.

Satisfaction of the formula (2) indicates that the type and the ratio of the lithium silicate contained in the silicon-based active material particle are appropriate. The intensity at $2\Theta = 24.8°$ becomes higher in proportion to the $Li_2Si_2O_5$ ratio. The $Li_2Si_2O_5$ is a compound formed in the range where the lithium doping amount to the silicon-based active material particle is small. The formula of 0.5 < I(24.8°)/Ia indicates that the entire or partial content of lithium of the silicon-based active material particle is small. Accordingly, the effect of improving the initial-stage efficiency becomes restrictive. Meanwhile, satisfaction of the formula (2) attains sufficient effect of improving the initial-stage efficiency.

Satisfaction of the formula (3) indicates that the ratio of crystalline Si is low. The low crystalline Si ratio suppresses formation of the lithium silicide during Li doping. The lithium silicide is more likely to elute in water than the lithium silicate, and to absorb air moisture. If the crystalline Si ratio is high, the lithium silicide is formed during Li doing, and moisture in the atmosphere is absorbed, thus deteriorating stability in the atmosphere. Satisfaction of the formula (3) indicates that the crystalline Si ratio is low. Accordingly, the negative electrode active material particle may be stabilized in the atmosphere.

Background corrected values as defined below are used for comparing intensity values at each $2\Theta$ obtained by the X-ray diffraction using Cu-K$\alpha$ radiation.

(1) The point at which the intensity is minimized in the range of $10° \leq 2\Theta \leq 15°$ is defined as a point A.
(2) The point at which the intensity is minimized in the range of $38° \leq 2\Theta \leq 45°$ is defined as a point B.
(3) For each value at $2\Theta$, the intensity value on the line AB is subtracted from the intensity value on the spectrum curve.

Preferably, the spectrum of the negative electrode active material, obtained by the X-ray diffraction does not substantially have a peak derived from $Li_2Si_2O_5$ at around $2\Theta = 24.8°$. If the spectrum has no peak derived from $Li_2Si_2O_5$, this indicates that the silicon-based active material particle has been entirely doped with sufficient amount of lithium uniformly. It is possible to obtain higher initial-stage efficiency.

Existence or non-existence of the peak will be determined as below.

(1) The X-ray diffraction using Cu-K$\alpha$ radiation is performed at intervals in $2\Theta = 0.15°$ to obtain spectrum data. In the case of measurement at intervals in smaller angle, an averaging process is executed so that the data are obtained at intervals in 0.15°.
(2) The background correction is executed in the range of $10° \leq 2\Theta \leq 45°$ to prepare the background corrected spectrum.
(3) A second derivative obtained by differentiating the background corrected spectrum twice is calculated to extract a minimum value (S) in the range of $24.0° \leq 2\Theta \leq 25.0°$.
(4) A value of standard deviation ($\sigma$) in the range of $10° \leq 2\Theta \leq 15°$ is calculated.
(5) In the case of S/$\sigma$ < 5, it is determined that no peak exists. In the case of 5 $\leq$ S/$\sigma$, it is determined that the peak exists.

Preferably, the spectrum obtained by the X-ray diffraction does not substantially have a peak derived from a Si (111) plane at around $2\Theta = 28.4°$. As the crystalline Si ratio becomes lower, formation of the lithium silicide during Li doping is suppressed to further enhance stability in the atmosphere.

Existence or non-existence of the peak will be defined as below.

(1) The X-ray diffraction using Cu-K$\alpha$ radiation is performed at intervals in $2\Theta = 0.15°$ to obtain spectrum data. In the case of measurement at intervals in smaller angle, an averaging process is executed so that the data are obtained at intervals in 0.15°.

(2) The background correction is performed in the range of $10° \leq 2\Theta \leq 45°$ to prepare the background corrected spectrum.

(3) A second derivative obtained by differentiating the background corrected spectrum twice is calculated to extract a minimum value (S) in the range of $28.2° \leq 2\Theta \leq 28.6°$.

(4) A value of the standard deviation ($\sigma$) in the range of $10° \leq 2\Theta \leq 15°$ is calculated.

(5) In the case of S/$\sigma$ < 5, it is determined that no peak exists. In the case of $5 \leq$ S/$\sigma$, it is determined that the peak exists.

Preferably, the spectrum obtained by the X-ray diffraction satisfies a formula of $1.2 \leq$ Ib/Ia $\leq 1.3$. If the formula is satisfied, it is possible to improve both the initial efficiency and stability in the atmosphere.

Preferably, the half-value width of the peak derived from the $Li_2SiO_3$ (020) plane is in a range from 1.2° to 1.3° inclusive. If the half-value width is within the range, it is possible to improve both the initial efficiency and stability in the atmosphere.

Preferably, the intensity I(29.9°) of the spectrum obtained by the X-ray diffraction, derived from $LiOH \cdot H_2O$ at $2\Theta = 29.9°$ satisfies a formula of I(29.9°)/Ia $\leq 0.7$. In the case of the silicon-based active material particle doped with lithium, high intensity at around $2\Theta = 29.9°$ indicates existence of a large amount of $LiOH \cdot H_2O$ on the surface. The $LiOH \cdot H_2O$ has a nature of absorbing air moisture and carbonic acid. Accordingly, in spite of small amount of the $LiOH \cdot H_2O$ existing on the surface of the negative electrode active material particle, it is possible to further effectively attain excellent stability in the atmosphere so long as the formula of I(29.9°)/Ia $\leq 0.7$ is satisfied.

Preferably, the spectrum obtained by the X-ray diffraction does not substantially have a peak derived from the $LiOH \cdot H_2O$ at around $2\Theta = 29.9°$. If the particle surface does not contain $LiOH \cdot H_2O$, stability in the atmosphere can be further enhanced by further suppressing absorption of air moisture and carbonic acid.

Existence or non-existence of the peak will be defined as below.

(1) The X-ray diffraction using Cu-K$\alpha$ radiation is performed at intervals in $2\Theta = 0.15°$ to obtain spectrum data. In the case of measurement at intervals in smaller angle, an averaging process is executed so that the data are obtained at intervals in 0.15°.

(2) The background correction is executed in the range of $10° \leq 2\Theta \leq 45°$ to prepare the background corrected spectrum.

(3) A second derivative obtained by differentiating the background corrected spectrum twice is calculated to extract a minimum value (S) in the range of $29.0° \leq 2\Theta \leq 30.0°$.

(4) A value of the standard deviation ($\sigma$) in the range of $10° \leq 2\Theta \leq 15°$ is calculated.

(5) In the case of S/$\sigma$ < 5, it is determined that no peak exists. In the case of $5 \leq$ S/$\sigma$, it is determined that the peak exists.

Preferably, the intensity 1(31.7°) of the spectrum obtained by the X-ray diffraction at $2\Theta = 31.7°$ satisfies a formula of I(31.7°)/Ia $\leq 0.7$. When the formula is satisfied, the amount of lithium carbonate contained in the negative electrode active material particle surface may be made appropriate. It is possible to further enhance stability in the atmosphere by suppressing absorption of moisture from the atmosphere.

Preferably, a content of silicon in 25°C water in which the negative electrode active material particle has been dispersed at a rate of 10 mass% for one hour is equal to or less than 50 mass ppm. When the silicon elution amount in the water is small, the silicon compound is hardly exposed even in the air. Because of small amount of the exposed silicon compound which exhibits properties of moisture absorption and binding property, it is possible to suppress agglomeration of the negative electrode active material particles. When the content of silicon in the 25°C water in which the negative electrode active material particle has been dispersed at a rate of 10 mass% for an hour is 50 mass ppm or smaller, exposure of the silicon compound in the air is suppressed. It is possible to obtain excellent stability in the atmosphere.

Preferably, the BET specific surface area of the negative electrode active material particle is in a range from 1 $m^2$/g to 3 $m^2$/g inclusive. When the BET specific surface area is equal to or larger than 1 $m^2$/g, it is possible to transfer lithium on the negative electrode active material particle surface sufficiently when preparing the battery. Accordingly, excellent initial efficiency is obtained. When the BET specific surface area is equal to or smaller than 3 $m^2$/g, it is possible to suppress the air contact area during storage in the atmosphere, and obtain excellent stability in the atmosphere.

Preferably, the median diameter (D50) of the negative electrode active material particle is in a range from 4.0 um to 15 um inclusive, and the ratio (D90/D10) between 10% accumulation diameter (D10) and 90% accumulation diameter (D90) is equal to or lower than 3. When the negative electrode active material particle is small, the lithium compound amount on the particle surface is increased. Meanwhile, when the negative electrode active material particle is large, it is difficult to diffuse the lithium inside the particle, deteriorating uniformity of the lithium in the negative electrode active material particle. When the median diameter is within the range, the inside of the negative electrode active material particle can be uniformly doped with lithium. It is then possible to further enhance stability in the atmosphere. When the ratio of D90/D10 is 3 or lower, the ratio of small or large particles to the whole silicon-based negative electrode active material is lowered. Accordingly, uniform lithium doping can be performed without being influenced by the particle size. It is possible to further enhance stability in the atmosphere. The particle size distribution is specified based on the volume-base particle size distribution which has been measured using the laser scattering-type apparatus for measuring particle size distribution.

Preferably, the surface layer of the negative electrode active material particle contains a carbon material, and an average thickness of the carbon material is in a range from 10 nm to 100 nm inclusive. As the surface layer of the negative electrode active material particle contains the carbon material, it is possible to enhance electron conductivity, and improve battery characteristics. Enhanced hydrophobicity on the surface can suppress absorption of moisture from the atmosphere. It is possible to enhance electron conductivity while holding the lithium ion conductivity so long as the average thickness of the carbon material is within the range. Accordingly, both the initial efficiency and stability in the atmosphere can be further improved.

The average thickness of the carbon material can be calculated by the following steps, for example. First, the negative electrode active material particle is observed by a TEM (transmission type electron microscope) at an arbitrary magnification. Preferably, the magnification is set to allow visual confirmation of the carbon material thickness so that the thickness can be measured. Then each thickness of the carbon material is measured at 15 arbitrary points. In this case, it is preferable to randomly set the measurement points over a broad range without concentration at specific points. Finally, an average of the carbon material thickness values at the 15 points is calculated.

Although the coating ratio of the carbon material is not specifically limited, the ratio is preferably made as high as possible. The coating ratio is desirably equal to or higher than 30% so that the electron conductivity is further improved. Although the carbon material coating method is not specifically limited, it is preferable to use the sugar carbonizing method and the hydrocarbon gas pyrolysis method for improving the coating ratio.

Preferably, the surface layer of the negative electrode active material particle contains the phosphate. The phosphate contained in the surface layer of the negative electrode active material particle forms a salt with the lithium diffused on the surface during storage in the atmosphere and traps the lithium, which allows suppression of lithium diffusion to the surface. Accordingly, stability in the atmosphere can be further enhanced.

Although the phosphate type is not specifically limited, the use of one or more of lithium phosphate, magnesium phosphate, and aluminum phosphate is preferable. The use of the phosphate as above can suppress the lithium diffusion to the surface while suppressing absorption of moisture and carbonic acid in the atmosphere.

Although the method for containing the phosphate in the surface is not specifically limited, it is preferable to use a dry type blend method including, for example, agitation blending, rolling blending, and shear blending, or a wet type blend method for spraying the phosphate dispersed in the solution to the negative electrode active material particle. The use of the method of shear blending is desirable, by which the phosphate can be uniformly adhered to or coated on the surface layer.

<Negative Electrode for Non-Aqueous Electrolyte Secondary Battery>

Next, the negative electrode for a non-aqueous electrolyte secondary battery, which contains the inventive negative electrode active material (hereinafter referred to as a "negative electrode") will be described. FIG. 2 is a sectional view illustrating a constitution example of the negative electrode for a non-aqueous electrolytic secondary battery containing the inventive negative electrode active material.

[Structure of Negative Electrode]

As illustrated in FIG. 2, a negative electrode 10 has a constitution having a negative electrode active material layer 12 on a negative electrode current collector 11. This negative electrode active material layer 12 may be provided on both surfaces or only one surface of the negative electrode current collector 11. As long as the inventive negative electrode active material is used, the negative electrode current collector 11 may be absent.

[Negative Electrode Current Collector]

The negative electrode current collector 11 is constituted with an excellent conductive material that excels in mechanical strength. Examples of the conductive material that can be used for the negative electrode current collector 11 include copper (Cu) and nickel (Ni). This conductive material is preferably a material that does not form an intermetallic compound with lithium (Li).

The negative electrode current collector 11 preferably contains carbon (C) or sulfur (S) in addition to the main elements. This is to improve physical strength of the negative electrode current collector. In particular, when the electrode has an active material layer to expand during charge, the current collector containing the above element has an effect of inhibiting deformation of the electrode containing the current collector. A content of the contained element is not particularly limited, but specifically preferably 100 mass ppm or less. This is because further higher effect of inhibiting the deformation can be obtained. Such an effect of inhibiting the deformation can further improve the cycle characteristics.

The surface of the negative electrode current collector 11 may be roughened or may not be roughened. The roughened negative electrode current collector is, for example, a metal foil subjected to an electrolytic treatment, emboss treatment, chemically etching treatment, etc. The non-roughened negative electrode current collector is, for example, a rolled metal foil.

[Negative Electrode Active Material Layer]

The negative electrode active material layer 12 contains the inventive negative electrode active material that may further contain other materials such as a negative electrode binder (binder) and a conductive auxiliary from the viewpoint of battery design.

The negative electrode active material layer 12 may contain a mixed negative electrode active material containing the inventive negative electrode active material and a carbon-based active material. This enables to decrease electric resistance of the negative electrode active material layer and to relax expansion stress with charge. As the carbon-based active material, pyrolyzed carbons, cokes, glassy carbon fibers, a sintered product of an organic polymer compound, carbon blacks, etc. can be used, for example.

Preferably, a ratio of mass of the silicon-based active material to a total mass of the silicon-based negative electrode active material and the carbon-based active material, which constitute the mixed negative electrode active material is equal to or higher than 6 mass%. As long as the ratio is equal to or higher than 6 mass%, it is possible to reliably obtain the effect for improving the battery capacity by using the silicon-based negative electrode active material.

As noted above, the negative electrode active material particle contained in the inventive negative electrode active material contains the silicon compound particle. The silicon compound particle is a silicon oxide material containing the silicon compound ($SiO_x$: $0.8 \leq x \leq 1.2$). The composition of $SiO_x$ having "x" closer to 1 is preferable. This is because high cycle characteristics can be obtained. The composition of the inventive silicon compound does not necessarily mean a 100% purity, and may contain a slight amount of an impurity element.

In the inventive negative electrode active material, the silicon compound particle contains $Li_2SiO_3$. In such a material, a $SiO_2$ component portion in the silicon compound that is destabilized during insertion and desorption of lithium during charge-discharge of the battery has been modified with another lithium silicate in advance, and thereby an irreversible capacity generated during charge can be reduced.

As the negative electrode binder contained in the negative electrode active material layer, any one or more of a polymer material, a synthetic rubber, etc. can be used, for example. Examples of the polymer material include polyvinylidene fluoride, polyimide, polyamideimide, aramid, polyacrylic acid, lithium polyacrylate, and carboxymethylcellulose. Examples of the synthesis rubber include a styrene-butadiene-based rubber, a fluorine-based rubber, and ethylene-propylene-diene.

As the negative electrode conductive auxiliary, any one or more of carbon materials such as carbon black, acetylene black, graphite, Ketjenblack, carbon nanotube, and carbon nanofiber can be used.

The negative electrode active material layer is formed by, for example, an applying method. The applying method is a method in which the negative electrode active material particles, the above binder, etc., and as necessary, the conductive auxiliary and the carbon-based active material particles are mixed in the negative electrode active material, and then dispersed in an organic solvent or water to be applied to the negative electrode current collector, etc.

[Method for Manufacturing Negative Electrode Active Material and Negative Electrode]

The negative electrode active material and the negative electrode may be manufactured in the following steps, for example. First, the method for manufacturing the negative electrode active material to be used for the negative electrode will be described.

The negative electrode active material particle is produced by steps of preparing the silicon compound particle containing the silicon compound ($SiO_x$: $0.8 \leq x \leq 1.2$), and inserting Li into the silicon compound particle for containing $Li_2SiO_3$. From the prepared negative electrode active material particles, the one which satisfies the following requirements is selected. When measuring the negative electrode active material particle by X-ray diffraction using Cu-K$\alpha$ radiation, a half-value width of a peak derived from a $Li_2SiO_3$ (020) plane obtained by the X-ray diffraction is in a range from 1.1° to 1.5° inclusive. The negative electrode active material particle, having the spectrum obtained by the X-ray diffraction satisfying all formulae (1) to (3) is selected;

$$1.1 \leq Ib/Ia \leq 1.5 \qquad (1)$$

$$I(24.8°)/Ia \leq 0.5 \qquad (2)$$

$$I(28.4°)/Ia \leq 1.0 \qquad (3)$$

where Ia denotes intensity of a peak derived from a $Li_2SiO_3$ (020) plane, Ib denotes intensity of a peak derived from a $Li_2SiO_3$ (111) plane, $1(24.8°)$ denotes intensity at $2\theta = 24.8°$, and $1(28.4°)$ denotes intensity at $2\Theta = 28.4°$. The selected negative electrode active material particle is used for manufacturing the negative electrode active material for a non-aqueous electrolyte secondary battery.

Specifically, the negative electrode active material can be manufactured as follows. A raw material to generate a silicon oxide gas is heated in the presence of an inert gas under a reduced pressure within a temperature range from 900°C to 1600°C to generate the silicon oxide gas. With considering the presence of surface oxygen of the metal silicon powder and a slight amount of oxygen in a reaction furnace, the mixing mole ratio is desirably within a range of 0.8 < the metal silicon powder/the silicon dioxide powder < 1.3.

The generated silicon oxide gas is solidified and deposited on an adsorption plate. Then, the deposited product of the silicon oxide is taken out in a state of the temperature in the reaction furnace decreased to 100°C or lower, and crushed by using a ball mill, a jet mill, etc. to form a powder. The powder may be classified. The process of crushing and classification can adjust the particle size distribution and the specific surface area of the silicon compound particle. The silicon compound particle can be prepared as above. The Si crystallite in the silicon compound particle can be adjusted by changing the vaporizing temperature or by a heat treatment after the generation of the silicon compound particle.

A layer of the carbon material may be generated on a surface layer of the silicon compound particle. A method for generating the layer of the carbon material is desirably a pyrolysis CVD method. The method for generating the layer of the carbon material by the pyrolysis CVD method will be described below.

First, the silicon compound particle is set in a furnace. Then, a hydrocarbon gas is introduced to the furnace, and a temperature in the furnace is raised. The decomposition temperature is not particularly limited, but desirably 1200°C or lower, and more desirably 850°C or lower. Regulation of the decomposition temperature can inhibit unintended disproportionation of the negative electrode active material particle, and the crystal growth. After the temperature in the furnace is raised to a predetermined temperature, the carbon layer is generated on the surface of the silicon compound particle. The hydrocarbon gas to be the raw material of the carbon material is not particularly limited, but desirably a $C_nH_m$ composition wherein $n \leq 4$. When $n \leq 4$, the manufacturing cost can be reduced, and the decomposed product can have excellent physical properties. Control of the decomposition temperature and the decomposition time can adjust the thickness of the carbon material of the surface layer of the negative electrode active material particle.

Then, Li is inserted into the silicon compound particle prepared as above to allow $Li_2SiO_3$ to be contained. Preferably, the Li is inserted by an oxidation-reduction method.

With the modification by the oxidation-reduction method, lithium can be inserted by immersing the silicon compound particle in a solution A in which lithium is dissolved in an ether solvent, for example. This solution A may further contain a polycyclic aromatic compound or a linear polyphenylene compound. After the insertion of lithium, active lithium can be desorbed from the silicon compound particle by immersing the silicon compound particle in a solution B containing a polycyclic aromatic compound or a derivative thereof. For a solvent of the solution B, an ether solvent, a ketone solvent, an ester solvent, an alcohol solvent, an amine solvent, or a mixed solvent thereof can be used, for example. After immersion in the solution B, the active lithium can be further desorbed from the silicon compound particle by immersing the silicon compound particle in a solution C containing the alcohol solvent, a carboxylic solvent, water, or a mixed solvent thereof. In place of the solution C, a solution C' can be used, which contains a compound with a quinoid structure in a molecule as the solute, and the ether solvent, the ketone solvent, the ester solvent, or a mixed solvent thereof as the solvent. The silicon compound particle can be immersed in the solutions B, C, C' repeatedly. Desorption of the active lithium after the insertion of lithium produces the negative electrode active material with higher water resistance. The resultant material may be washed by a method for washing with an alcohol, an alkaline water dissolving lithium carbonate, a weak acid, pure water, etc. The lithium content of the silicon active material particle can be adjusted by controlling the insertion amount and desorption amount of the lithium.

As the ether solvent used for the solution A, diethyl ether, tert-butyl methyl ether, tetrahydrofuran, dioxane, 1,2-dimethoxyethane, diethylene glycol dimethyl ether, triethylene glycol dimethyl ether, tetraethylene glycol dimethyl ether, a mixed solvent thereof, etc. can be used. Among these, tetrahydrofuran, dioxane, or 1,2-dimethoxyethane is particularly preferably used. Preferably, these solvents are dehydrated, and deoxygenated.

As the polycyclic aromatic compound contained in the solution A, one or more of naphthalene, anthracene, phenanthrene, naphthacene, pentacene, pyrene, picene, triphenylene, coronene, chrysene, and derivatives thereof can be used. As the linear polyphenylene compound, one or more of biphenyl, terphenyl, and derivatives thereof can be used.

As the polycyclic aromatic compound contained in the solution B, one or more of naphthalene, anthracene, phenanthrene, naphthacene, pentacene, pyrene, picene, triphenylene, coronene, chrysene, and derivatives thereof can be used.

As the ether solvent of the solution B, diethyl ether, tert-butyl methyl ether, tetrahydrofuran, dioxane, 1,2-dimethoxyethane, diethylene glycol dimethyl ether, triethylene glycol dimethyl ether, tetraethylene glycol dimethyl ether, etc. can be used.

As the ketone solvent, acetone, acetophenone, etc. can be used.

As the ester solvent, methyl formate, methyl acetate, ethyl acetate, propyl acetate, isopropyl acetate, etc. can be used.

As the alcohol solvent, methanol, ethanol, propanol, isopropyl alcohol, etc. can be used.

As the amine solvent, methylamine, ethylamine, ethylenediamine, etc. can be used.

The solvent C may be prepared by mixing solvents in multiple stages. For example, the ketone solvent and the silicon compound are mixed and stirred. The alcohol solvent is then added to the mixture.

As the alcohol solvent of the solution C, methanol, ethanol, propanol, isopropyl alcohol, etc. can be used.

As the carboxylic solvent, a formic acid, an acetic acid, an oxalic acid, etc. can be used.

Besides the use of pure water for water as the solvent, a water solution containing a solute can be used, for example, an ammonia water, a lithium acetate water, a lithium carbonate water, a lithium hydroxide water, etc.

The mixture solvent prepared by mixing two or more of the alcohol solvent, the carboxylic solvent, and water can be used.

The thermal treatment may be performed after modification by the oxidation-reduction method. The thermal treatment allows crystallization of lithium silicate in the lithium-doped silicon-based active material particle. Although the heat treatment machine is not specifically limited, it is preferable to use the rotary kiln. The use of the rotary kiln allows uniform heating. Although the heat treatment temperature is not specifically limited, it is preferable to set the temperature to 800°C or lower, and more preferably to 650°C or lower. Although the heat treatment atmosphere is not specifically limited, the inert gas atmosphere such as argon gas and nitrogen gas is preferable so that oxidation and absorption of carbonic acid during heat treatment can be suppressed. Control of the heat treatment temperature, the heat treatment time, and the heat treatment atmosphere regulates the type and crystallinity of the lithium silicate, disproportionation and crystallinity of Si, and abundance of $LiOH \cdot H_2O$ and lithium carbonate. Although not specifically limited, it is preferable to keep the inside of the heat treatment machine in the ventilated state rather than the sealed state. After executing the oxidation-reduction method, residing solvent and the solute component on the surface of the silicon-based active material particle can be removed. Control of the air flow rate makes the solvent and the solute component residing on the surface of the silicon-based active material particle reacted to serve as the carbon component for adhesion to or coating on the surface. It is possible to adjust the surface area of the silicon-based active material particle, and the thickness of the carbon material on the surface layer.

The thermal doping process may be used to insert Li into the silicon compound particle. In the thermal doping process, modification may be performed by mixing the silicon compound particle with LiH powder and Li powder, and heating the mixture under the non-oxidation atmosphere. For example, Ar atmosphere may be used as the non-oxidation atmosphere. More specifically, the LiH powder or the Li powder is mixed with silicon oxide powder sufficiently under the Ar atmosphere, and sealed. The mixture-containing sealed container is subjected to stirring for uniformity. Thereafter, the mixture is heated at the temperature ranging from 700°C to 750°C for modification. In this case, the active Li is partially desorbed from the silicon compound, and the heated powder is sufficiently cooled for further stabilizing the slurry. Then the product may be washed with alcohol, alkaline water, weak acid, or pure water.

The negative electrode active material particle measured by the X-ray diffraction using Cu-Kα radiation, which satisfies the conditions for such measurement is selected from those (silicon compound particles) prepared as above. Conditions for preparing the negative electrode active material particle for satisfying the respective conditions may be set based on experiments.

<Water-based Negative Electrode Slurry Composition>

The negative electrode active material prepared and selected as above is mixed with other materials such as the negative electrode binder and the conductive auxiliary as necessary into a mixture, to which an organic solvent, water, etc. is added to form a water-based negative electrode slurry composition.

Then, the water-based negative electrode slurry composition is applied onto a surface of the negative electrode current collector, and dried to form the negative electrode active material layer. In this time, heat-pressing may be performed as necessary. The negative electrode can be prepared as above.

<Lithium-ion Secondary Battery>

The lithium-ion secondary battery which contains the inventive negative electrode active material will be described. In the description, a laminate-film-type lithium-ion secondary battery is exemplified.

[Constitution of Laminate-Film-Type Lithium-Ion Secondary Battery]

A laminated-film-type lithium-ion secondary battery 20 illustrated in FIG. 3 has a constitution in which a wound electrode assembly 21 is housed inside an exterior member 25 mainly having a sheet shape. This wound electrode assembly has a separator between the positive electrode and the negative electrode, and has a wound structure thereof. There is a case where a stacked product having a separator between the positive electrode and the negative electrode is housed. In any of the electrode assemblies, a positive electrode lead 22 is attached to the positive electrode, and a negative electrode lead 23 is attached to the negative electrode. The outermost peripheral portion of the electrode assembly is protected with a protective tape.

The positive electrode lead and the negative electrode lead are drawn in one direction from an inside of the exterior member 25 outward, for example. The positive electrode lead 22 is formed with a conductive material such as, for example, aluminum. The negative electrode lead 23 is formed with a conductive material such as, for example, nickel and copper.

The exterior member 25 is, for example, a laminated film formed by stacking a fusing layer, a metal layer, and a surface-protecting layer in this order. Two of this laminated film are pasted by fusing each of the outer peripheral portions of the fusing layers thereof or by adhesive agent so that the fusing layer of the laminated film is opposite to the electrode assembly 21. The fusing part is, for example, a film of polyethylene, polypropylene, etc., and the metal part is aluminum foil, etc. The protective layer is made of, for example, nylon.

Between the exterior member 25 and each of the positive electrode lead 22 and the negative electrode lead 23, adhesive films 24 are inserted to prevent entering of external air. This material is, for example, polyethylene, polypropylene, or a polyolefin resin.

[Positive Electrode]

The positive electrode has, as in the negative electrode 10 in FIG. 2, a positive electrode active material layer on both surfaces or one surface of a positive electrode current collector, for example.

The positive electrode current collector is formed with a conductive material such as aluminum.

The positive electrode active material layer contains any one or two or more positive electrode materials that are able to occlude and release lithium ions, and may contain other materials such as a binder, a conductive auxiliary, and a dispersing agent, according to the design. In this case, details about the binder and the conductive auxiliary are the same as those of, for example, the negative electrode binder and the negative electrode conductive auxiliary, which have been described.

The positive electrode material is desirably a lithium-containing compound. Examples of this lithium-containing compound include a composite oxide composed of lithium and a transition metal element, or a phosphate compound having lithium and a transition metal element. Among these positive electrode materials, a compound containing at least one or more of nickel, iron, manganese, and cobalt is preferable. These materials are represented as a chemical formula of, for example, $Li_xM1O_2$ or $Li_yM2PO_4$. In the formulae, M1 and M2 represent at least one or more transition metal elements. The values of "x" and "y", which indicate different values depending on a charge-discharge state of the battery, are typically represented by $0.05 \leq x \leq 1.10$, and $0.05 \leq y \leq 1.10$, respectively.

Examples of the composite oxide having lithium and a transition metal element include lithium-cobalt composite oxide ($Li_xCoO_2$) and lithium-nickel composite oxide ($Li_xNiO_2$). Examples of the phosphate compound having lithium and a transition metal element include lithium iron phosphate compound ($LiFePO_4$) or lithium iron manganese phosphate compound ($LiFe_{1-u}Mn_uPO_4$ $(0 < u < 1)$). Use of these positive electrode materials can yield the high battery capacity as well as excellent cycle characteristics.

[Negative Electrode]

The negative electrode has a constitution similar to that of the aforementioned negative electrode 10 for a lithium-ion secondary battery in FIG. 2, and has, for example, negative electrode active material layers 12 on both surfaces of the current collector 11. This negative electrode preferably has a larger negative electrode charge capacity than an electric capacity (charge capacity of a battery) obtained with the positive electrode active material agent. This can inhibit precipitation of lithium metal on the negative electrode.

The positive electrode active material layers are provided on each part of both the surfaces of the positive electrode current collector, and the negative electrode active material layers are also similarly provided on each part of both the surfaces of the negative electrode current collector. In this case, the negative electrode active material layer provided on the negative electrode current collector has a region where there is no confronting positive electrode active material layer. This is to achieve a stable battery design.

In the non-opposed region where the negative electrode active material layer and the positive electrode active material layer are not opposite to each other, there is almost no effect by charge and discharge. Thus, the state of the negative electrode active material layer is maintained as that immediately after the formation. This enables to accurately determine the composition of the negative electrode active material, etc. with excellent reproducibility regardless of charge and discharge.

[Separator]

The separator separates the positive electrode from the negative electrode, and allows lithium ions to permeate while preventing a short-circuit current due to contact of both the electrodes. This separator is formed with a porous film composed of, for example, a synthetic resin or ceramic, and may have a stacked structure in which two or more types of porous films are stacked. Examples of the synthetic resin include polytetrafluoroethylene, polypropylene, polyethylene, etc.

[Electrolyte Liquid]

At least a part of the active material layer or the separator is impregnated with a liquid electrolyte (electrolyte liquid). This electrolyte liquid dissolves an electrolyte salt in a solvent, and may contain other materials such as an additive.

As the solvent, a non-aqueous solvent can be used, for example. Examples of the non-aqueous solvent include ethylene carbonate, propylene carbonate, butylene carbonate, dimethyl carbonate, diethyl carbonate, ethyl methyl carbonate, methyl propyl carbonate, 1,2-dimethoxyethane, or tetrahydrofuran. Among these, the use of at least one or more of ethylene carbonate, propylene carbonate, dimethyl carbonate, diethyl carbonate, and ethyl methyl carbonate is desirable. This is because better characteristics can be obtained. In this case, combination of a high-viscosity solvent such as ethylene carbonate and propylene carbonate, and a low-viscosity solvent such as dimethyl carbonate, ethyl methyl carbonate, and diethyl carbonate can yield more advantageous characteristics. This is because dissociating ability and ion mobility of the electrolyte salt are improved.

When using an alloy-type negative electrode, the solvent particularly desirably contains at least one kind of a halogenated chain carbonate ester or a halogenated cyclic carbonate ester. This forms a stable coating on the negative electrode active material surface during charge and discharge, particularly during charge. Here, the halogenated chain carbonate ester refers to a chain carbonate ester having a halogen as a constitution element (at least one hydrogen is substituted with a halogen). The halogenated cyclic carbonate ester refers to a cyclic carbonate ester having a halogen as a constitution element (that is, at least one hydrogen is substituted with a halogen).

A type of the halogen is not particularly limited, but fluorine is preferable. This is because fluorine forms a coating with quality better than other halogens. A larger number of halogens is more desirable. This is because the resultant coating becomes more stable, and a decomposition reaction of the electrolyte liquid is reduced.

Examples of the halogenated chain carbonate ester include fluoromethyl methyl carbonate and difluoromethyl methyl carbonate. Examples of the halogenated cyclic carbonate ester include 4-fluoro-1,3-dioxolan-2-one and 4,5-difluoro-1,3-dioxolan-2-one.

As the additive for the solvent, an unsaturated carbon-bond cyclic carbonate ester is preferably contained. This is because a stable coating is formed on the negative electrode surface during charge and discharge, and the decomposition reaction of the electrolyte liquid can be inhibited. Examples of the unsaturated carbon-bond cyclic carbonate ester include vinylene carbonate or vinylethylene carbonate.

As the additive for the solvent, a sultone (cyclic sulfonate ester) is preferably contained. This is because chemical stability of the battery is improved. Examples of the sultone include propanesultone and propenesultone.

The solvent preferably further contains an acid anhydride. This is because chemical stability of the electrolyte liquid is improved. Examples of the acid anhydride include propanedisulfonic anhydride.

The electrolyte salt can contain, for example, any one or more of light metal salts, such as a lithium salt. Examples of the lithium salt include lithium hexafluorophosphate ($LiPF_6$) and lithium tetrafluoroborate ($LiBF_4$).

A content of the electrolyte salt is preferably in a range from 0.5 mol/kg to 2.5 mol/kg inclusive to the solvent. This is because high ion conductivity can be obtained.

[Method for Manufacturing Laminated-Film-Type Secondary Battery]

The negative electrode can be prepared using the negative electrode active material manufactured by the method for manufacturing the inventive negative electrode active material. The lithium-ion secondary battery described above can be manufactured using the prepared negative electrode.

A positive electrode is produced using the above positive electrode material as above. First, the positive electrode active material, and as necessary, the binder, the conductive auxiliary, etc. are mixed to form a positive electrode mixture. The positive electrode mixture is dispersed in an organic solvent to form a positive electrode mixture slurry. Subsequently, the mixture slurry is applied onto the positive electrode current collector with a coating apparatus, such as a knife roller or a die coater having a die head, and dried with hot air to obtain the positive electrode active material layer. Finally, the positive electrode active material layer is compressed and molded with a roll-pressing machine, etc. In this time, heating may be performed. Alternatively, heating or compression may be repeated multiple times.

Then, according to the operation procedure similar to the preparation of the negative electrode 10 for the lithium-ion secondary battery as described above, the negative electrode active material layer is formed on the negative electrode current collector to prepare the negative electrode.

When preparing the positive electrode and the negative electrode, the active material layers are formed on both surfaces of the positive and negative electrode current collectors. In this time, in either the electrode, each length of the applied active materials on both the surfaces may not be the same (see FIG. 2).

Subsequently, the electrolyte liquid is prepared. Then, by ultrasonic welding, etc., the positive electrode lead 22 is attached to the positive electrode current collector, and the negative electrode lead 23 is attached to the negative electrode current collector. Then the positive electrode and the negative electrode are stacked via the separator, or wound to prepare the wound electrode assembly 21. To the outermost peripheral portion thereof, a protective tape is bonded. Then, the wound structure is molded to have a flat shape. Subsequently, the wound electrode assembly is sandwiched between the exterior member 25 with a folded film shape, and insulating parts of the exterior member are bonded to each other by a thermal fusing method. The wound electrode assembly is enclosed in a released state in only one direction. The adhesive films are inserted between the positive electrode lead and the exterior member, and between the negative electrode lead and the exterior member, respectively. A predetermined amount of the electrolyte liquid prepared as above is poured through the released part to perform vacuum impregnation. After the impregnation, the released part is bonded by a vacuum thermal fusing method. As above, the laminated-film-type lithium-ion secondary battery 20 can be manufactured.

EXAMPLE

Hereinafter, the present invention will be more specifically described with showing Examples and Comparative Examples of the present invention, but the present invention is not limited to these Examples.

Example 1-1

The laminate-film-type lithium-ion secondary battery 20 as illustrated in FIG. 3 was prepared by the following steps.

The positive electrode was prepared first. The positive electrode active material was formed into a positive electrode mixture by mixing 95 mass% of $LiNi_{0.7}Co_{0.25}Al_{0.05}O$ as a lithium-nickel-cobalt composite oxide, 2.5 mass% of the positive electrode conductive auxiliary, and 2.5 mass% of the positive electrode binder (polyvinylidene fluoride: PVDF). Then the positive electrode mixture was dispersed in the organic solvent (N-methyl-2-pyrolidone: NMP) to form a pasty slurry. The slurry was applied to both surfaces of the positive electrode current collector by the coating apparatus with die head, and dried by a hot air type drying apparatus. The positive electrode current collector with thickness of 15 um was used. Finally, the obtained product was compressed and molded with the roll-pressing machine.

Next, the negative electrode was prepared. The negative electrode active material was first prepared by the following steps. The raw material formed by mixing a metal silicon and a silicon dioxide was introduced to the reaction furnace, and vaporized in the atmosphere in a vacuum degree of 10 Pa. The resultant product was deposited on the adsorption plate, and sufficiently cooled. The deposited product was taken out, and crushed by the ball mill. The value "x" of $SiO_x$ of the obtained silicon compound particle was 0.8. The particle size of the silicon compound particle was regulated by classification. The pyrolysis CVD method was used with propylene gas to coat the surface of the silicon compound particle with the carbon material. The Si crystallite of the silicon compound particle was adjusted in accordance with the pyrolysis CVD temperature. The thickness of the carbon material was adjusted in accordance with the temperature and time for the pyrolysis CVD.

Subsequently, the oxidation-reduction method was used to insert lithium into the silicon compound particle for modification. The content of lithium in the silicon compound particle was adjusted by controlling insertion amount and desorption amount of the lithium.

Next, the modified silicon-based active material particle was heat treated. The rotary kiln was used as the heat treatment machine at the temperature 800°C or lower while ventilating an argon gas. The heat treatment temperature, the heat treatment time, and heat treatment atmosphere were controlled to adjust the type and crystallinity of the lithium silicate, the degree of disproportionation and crystallinity of Si, and abundance of $LiOH \cdot H_2O$ or lithium carbonate.

Subsequently, the X-ray diffraction measurement using Cu-K$\alpha$ radiation was performed, and background was corrected by the method as described above to obtain a background corrected spectrum. Values of Ia, Ib, 1(24.8°), 1(28.4°), 1(29.9°), 1(31.7°) were read from the background corrected spectrum. Values of Ib/Ia, I(24.8°)/Ia, I(28.4°)/Ia, I(29.9°)/Ia, and I(31.7°)/Ia were calculated using these values to obtain Ib/Ia = 1.3, I(24.8°)/Ia = 0.3, I(28.4°)/Ia = 0.8, I(29.9°)/Ia = 0.4, and I(31.7°)/Ia = 0.3. The half-value width of the peak derived from the $Li_2SiO_3$ (020) plane was 1.3°.

Next, the negative electrode active material particle was dispersed in 25°C water at a rate of 10 mass% for an hour. Then the content of silicon in the water was measured by the following method. The negative electrode active material particle was dispersed in 25°C pure water at a rate of 10 mass%, and stirred for an hour. Thereafter, the dispersed solution was filtrated, and the resultant filtrate was collected to measure the Si content in the water by using the ICP-OES method. The Si content was 10 mass ppm.

The particle size distribution and the BET specific surface area of the silicon-based active material particle were measured to obtain the median diameter of 7 $\mu$m, D90/D10 = 2, and the BET specific surface area of 1 $m^2$/g.

Next, the negative electrode active material was blended with the carbon-based active material so that the mass ratio between the silicon-based active material particle and the carbon-based active material became 2:8 to prepare a mixed negative electrode active material. The carbon-based active material was formed by mixing natural graphite and artificial graphite coated with the pitch layer at the mass ratio of 5:5. The median diameter of the carbon-based active material was 20 $\mu$m.

Then, the mixed negative electrode active material, a conductive auxiliary 1 (carbon nanotube, CNT), a conductive auxiliary 2 (carbon fine particles having a median diameter of approximately 50 nm), styrene-butadiene rubber (styrene-butadiene copolymer, hereinafter, referred to as SBR), and carboxymethylcellulose (hereinafter, referred to as CMC) were mixed at a dry mass ratio of 92.5:1:1:2.5:3. Then the mixture was diluted with pure water to form an aqueous negative electrode slurry. Each of the SBR and the CMC serve as the negative electrode binder.

As a negative electrode current collector, an electrolytic copper foil with thickness of 15 um was used. This electrolytic copper foil contained carbon and sulfur at each concentration of 70 mass ppm. Finally, the negative electrode mixture slurry was applied onto the negative electrode current collector, and dried in a vacuum atmosphere at 100°C for one hour. After drying, an amount of the deposited negative electrode active material layer per unit area (also referred to as an area density) on one surface of the negative electrode resulted in 5 mg/$cm^2$.

Then, the solvent mixture was prepared (4-fluoro-1,3-dioxolane-2-one (FEC), ethylene carbonate (EC), and dimethyl carbonate (DMC)) for dissolving an electrolyte salt (lithium hexafluorophosphate: $LiPF_6$) to prepare an electrolyte liquid. In this case, the composition of the solvent was FEC:EC:DMC = 10:20:70 in a volume ratio, and a content of the electrolyte salt was 1.2 mol/kg relative to the solvent.

Next, the secondary battery was assembled by the following steps. First, an aluminum lead was ultrasonically welded to one end of the positive electrode current collector. A nickel lead was welded to one end of the negative electrode current collector. Then, the positive electrode, the separator, the negative electrode, and the separator were stacked in this order, which were wound in the longitudinal direction to form a wound electrode assembly. A winding end of the assembly was fixed with a PET protective tape. As the separator, a laminated film (thickness: 12 um) interposed between a film mainly formed with a porous polyethylene and a film mainly formed with a porous polyethylene was used. After inserting the electrode assembly between the exterior members, outer peripheral portions were heat fusion bonded except one side to store the electrode assembly therein. As the exterior member, an aluminum laminate film formed by stacking the nylon film, an aluminum foil, and a polypropylene film was used. The adjusted electrolyte liquid was poured from an opening for impregnation under the vacuum atmosphere so that heat fusion bonding and sealing were performed.

The initial charge-discharge characteristics of the above-prepared secondary battery were evaluated.

The initial efficiency (hereinafter, referred to as an initial-stage efficiency) was calculated for determining the initial charge-discharge characteristics. The initial efficiency was calculated by the formula represented by Initial Efficiency (%) = (Initial Discharge Capacity/Initial Charge Capacity) $\times$ 100.

Stability in the atmosphere was evaluated by the following method. In the method, 10 g of the prepared negative electrode active material particle was put into a thermostat chamber at 40°C and 75 RH%. The negative electrode active material particle was kept for 24 hours therein. Thereafter, the initial efficiency, a weight change, a Li elution amount, and an agglomeration state were measured.

The Li elution amount was measured by the following steps. Each amount of alkali on the surface before and after storage in the thermostat chamber was measured. The Li elution amount was calculated by the following formula using the amount of alkali on the surface before storage in the thermostat chamber (B1), and the amount of alkali on the surface after storage in the thermostat chamber (B2):

$$\text{(Li elution amount)} = B2 - B1.$$

The amount of alkali on the surface was measured by the following steps. First, 1 g of the negative electrode active material particle was dispersed in 50 g of 25°C water, and stirred for 10 minutes. A filtrate obtained by filtrating the dispersion liquid was subjected to a neutralization titration. A weight of lithium ion in the filtrate was derived from the titre obtained until hydrogen ion concentration reached pH 5. The obtained weight of lithium ion was divided by the lithium content in the negative electrode active material to calculate the amount of alkali on the surface.

The agglomeration state was evaluated by comparing weights of residues on a sieve as a result of suction sieving before and after storage in the thermostat chamber. The suction sieving was performed by the following steps. In the step, 100 g of the negative electrode active material particle was prepared, and sieved through a suction sieve with a mesh size of 45 um for 2 minutes. The suction pressure was set to 3 kPa. After completion of sieving, the residue on the sieve was weighed. The weights of the residues on the sieve before and after the storage in the thermostat chamber were compared. If the weight of the residue on the sieve was 0.02 g or more, the agglomerated state was determined. If the weight was less than 0.02 g, the non-agglomerated state was determined.

Examples 1-2 to 1-3 and Comparative Examples 1-1, 1-2

The secondary battery was manufactured in the same manner as in Example 1-1 except that an oxygen content of the silicon compound in the bulk was adjusted. The oxygen content was adjusted by changing a ratio between the metal silicon and silicon dioxide in the raw material for forming the silicon compound, and a heating temperature. Table 1 shows values of "x" of $SiO_x$ representing the silicon compound in Examples 1-1 to 1-3, and Comparative Examples 1-1, 1-2.

The silicon-based active material particle in Examples 1-1 to 1-3 and Comparative Examples 1-1, 1-2 yielded properties as below. $Li_2SiO_3$ was contained in the silicon compound particle in the negative electrode active material particle. In the silicon compound, the half-value width ($2\theta$) of the diffraction peak derived from the $Li_2SiO_3$ (020) crystal plane obtained by the X-ray diffraction was 1.3°. The resultant intensity ratios were as follows: Ib/Ia = 1.3, I(24.8°)/Ia = 0.3, I(28.4°)/Ia = 0.8, I(29.9°)/Ia = 0.4, I(31.7°)/Ia = 0.3. Both peaks of $Li_2Si_2O_5$ and $LiOH \cdot H_2O$ were not confirmed. The average thickness of the carbon material coated on the surface was 50 nm. The median diameter of the negative electrode active material particle was 7 um. The BET specific surface area of the negative electrode active material particle was 1 $m^2/g$.

Table 1 summarizes evaluation results of Examples 1-1 to 1-3, and Comparative Examples 1-1, 1-2.

[Table 1]

| SiOx ratio : 20 mass%, $Li_2SiO_3$ contained, FWHM derived from $Li_2SiO_3$ (020) plane: 1.3, Ib/Ia: 1.3, I(24.8°)/Ia: 0.3, peak of $Li_2Si_2O_5$: none, I(28.4°)/Ia: 0.8, peak of Si (111) plane: none, I(29.9°)/Ia: 0.4, peak of $LiOH \cdot H_2O$: none, I(31.7°)/Ia: 0.3, silicon elution amount: 10 mass ppm, BET specific surface area: 1 $m^2/g$, D50 = 7 $\mu$m, D90/D10 = 2, carbon material thickness: 50 nm, phosphate: none | | | | | | |
|---|---|---|---|---|---|---|
| Table 1 | Value X of SiOx | Initial efficiency | After 24-hour storage | | | |
| | | | Initial efficiency | Weight change | Li elution amount | Agglomeration |
| Comparative Example 1-1 | 0.7 | 92% | 90% | 5% | 15% | Agglomerated |
| 1-1 Example | 0.8 | 92% | 92% | 1% | 3% | Not agglomerated |
| 1-2 Example | 0.9 | 92% | 92% | 0% | 2% | Not agglomerated |

(continued)

SiOx ratio : 20 mass%, Li$_2$SiO$_3$ contained, FWHM derived from Li$_2$SiO$_3$ (020) plane: 1.3, Ib/Ia: 1.3, I(24.8°)/Ia: 0.3, peak of Li$_2$Si$_2$O$_5$: none, I(28.4°)/Ia: 0.8, peak of Si (111) plane: none, I(29.9°)/Ia: 0.4, peak of LiOH·H$_2$O: none, I (31.7°)/Ia: 0.3, silicon elution amount: 10 mass ppm, BET specific surface area: 1 m$^2$/g, D50 = 7 $\mu$m, D90/D10 = 2, carbon material thickness: 50 nm, phosphate: none

| Table 1 | Value X of SiOx | Initial efficiency | After 24-hour storage | | | |
| --- | --- | --- | --- | --- | --- | --- |
| | | | Initial efficiency | Weight change | Li elution amount | Agglomeration |
| Example 1-3 | 1.2 | 91% | 91% | 1% | 3% | Not agglomerated |
| Comparative Example 1-2 | 1.3 | 87% | 86% | 4% | 5% | Agglomerated |

Referring to Table 1, when the value x of SiOx representing the silicon compound deviates from the range of $0.8 \leq x \leq 1.2$, the battery characteristics or stability in the atmosphere was deteriorated. For example, as indicated by Comparative Example 1-1 where the oxygen content (x = 0.7) was insufficient, the weight change and Li elution amount were large, causing agglomeration. The initial efficiency after storage was largely lowered from the one before storage. Meanwhile, in the case of a large oxygen content (x = 1.3) as indicated by Comparative Example 1-2, conductivity was lowered, and the initial efficiency before storage was low.

Examples 2-1, 2-2

The secondary battery was prepared under the same condition as that of Example 1-2 except that the half-value width of Li$_2$SiO$_3$ to be contained in the silicon compound particle was changed as shown in Table 2. Stability of the negative electrode active material in the atmosphere, and the initial efficiency of the secondary battery were evaluated.

Comparative Example 2-1

The secondary battery was prepared under the same condition as that of Example 1-2 except that lithium was not inserted into the silicon compound particle. Stability of the negative electrode active material in the atmosphere, and the initial efficiency of the secondary battery were evaluated.

Table 2 summarizes results of Examples 2-1 to 2-4, and Comparative Examples 2-1 to 2-3.

[Table 2]

SiOx(x=0.9), SiOx ratio : 20 mass%, Ib/Ia: 1.3, I(24.8°)/Ia: 0.3, peak of Li$_2$Si$_2$O$_5$: none, I (28.4°) /Ia: 0.8, peak of Si (111) plane: none, I(29.9°)/Ia: 0.4, peak of LiOH·H$_2$O: none, I(31.7°)/Ia: 0.3, silicon elution amount: 10 mass ppm, BET specific surface area: 1 m$^2$/g, D50 = 7 D90/D10 = 2, carbon material thickness: 50 nm, phosphate: none

| Table 2 | Li$_2$SiO$_3$ | Li$_2$SiO$_3$ (020) FWHM | Initial efficiency | After 24-hour storage | | | |
| --- | --- | --- | --- | --- | --- | --- | --- |
| | | | | Initial efficiency | Weight change | Li elution amount | Agglomeration |
| Comparative Example 2-1 | Not exist | None | 80% | 80% | 0% | 0% | Not agglomerated |
| Comparative Example 2-2 | Exist | 1 | 87% | 87% | 0% | 1% | Not agglomerated |
| Example 2-1 | Exist | 1.1 | 90% | 89% | 1% | 3% | Not agglomerated |
| Example 2-2 | Exist | 1.2 | 92% | 92% | 0% | 2% | Not agglomerated |
| Example 1-2 | Exist | 1.3 | 92% | 92% | 0% | 2% | Not agglomerated |

(continued)

| SiOx(x=0.9), SiOx ratio : 20 mass%, Ib/Ia: 1.3, I(24.8°)/Ia: 0.3, peak of Li$_2$Si$_2$O$_5$: none, I (28.4°) /Ia: 0.8, peak of Si (111) plane: none, I(29.9°)/Ia: 0.4, peak of LiOH·H$_2$O: none, I(31.7°)/Ia: 0.3, silicon elution amount: 10 mass ppm, BET specific surface area: 1 m$^2$/g, D50 = 7 D90/D10 = 2, carbon material thickness: 50 nm, phosphate: none | | | | | | | |
|---|---|---|---|---|---|---|---|
| Table 2 | Li$_2$SiO$_3$ | Li$_2$SiO$_3$ (020) FWHM | Initial efficiency | After 24-hour storage | | | |
| | | | | Initial efficiency | Weight change | Li elution amount | Agglomeration |
| Example 2-3 | Exist | 1.4 | 90% | 89% | 1% | 3% | Not agglomerated |
| Example 2-4 | Exist | 1.5 | 90% | 89% | 1% | 4% | Agglomerated |
| Comparative Example 2-3 | Exist | 1.6 | 88% | 85% | 4% | 10% | Agglomerated |

As the silicon compound contained Li$_2$SiO$_3$, the initial-stage efficiency was significantly improved. Meanwhile, in Comparative Example 2-1 where lithium was not contained in the silicon compound without modification, the initial-stage efficiency was lowered. When the half-value width of Li$_2$SiO$_3$ was in the range from 1.1° to 1.5° inclusive, excellent initial efficiency and stability in the atmosphere were yielded. Meanwhile, in Comparative Example 2-2 where the half-value width of Li$_2$SiO$_3$ was smaller than 1.1°, the initial efficiency before storage was lowered. In Comparative Example 2-3 where the half-value width of Li$_2$SiO$_3$ was larger than 1.5°, lowering of the initial efficiency after storage, weight increase, Li elution, and agglomeration were confirmed, causing instability in the atmosphere.

Examples 3-1, 3-2 and Comparative Examples 3-1, 3-2

The secondary battery was prepared under the same condition as that of Example 1-2 except that the Ib/Ia was adjusted as indicated by Table 3. Stability of the negative electrode active material in the atmosphere, and the initial efficiency of the secondary battery were evaluated.

Table 3 summarizes results of Examples 3-1, 3-2, and Comparative Examples 3-1, 3-2.

[Table 3]

| SiOx(x=0.9), SiOx ratio : 20 mass%, Li$_2$SiO$_3$ contained, FWHM derived from Li$_2$SiO$_3$ (020) plane: 1.3, I(24.8°)/Ia: 0.3, peak of Li$_2$Si$_2$O$_5$: none, I(28.4°)/Ia: 0.8, peak of Si (111) plane: none, I(29.9°)/Ia: 0.4, peak of LiOH·H$_2$O: none, I(31.7°)/Ia: 0.3, silicon elution amount: 10 mass ppm, BET specific surface area: 1 m$^2$/g, D50 = 7 $\mu$m, D90/D10 = 2, carbon material thickness: 50 nm, phosphate: none | | | | | | |
|---|---|---|---|---|---|---|
| Table 3 | Ib/Ia | Initial efficiency | After 24-hour storage | | | |
| | | | Initial efficiency | Weight change | Li elution amount | Agglomeration |
| Comparative Example 3-1 | 1 | 910 | 91% | 4% | 5% | Agglomerated |
| Example 3-1 | 1.1 | 92% | 91% | 1% | 2% | Not agglomerated |
| Example 1-2 | 1.3 | 92% | 92% | 0% | 2% | Not agglomerated |
| Example 3-2 | 1.5 | 91% | 91% | 0% | 1% | Not agglomerated |
| Comparative Example 3-2 | 1.6 | 87% | 86% | 0% | 2% | Not agglomerated |

Referring to Table 3, when the range of 1.1 ≤ Ib/Ia ≤1.5 was satisfied, the initial efficiency and stability in the atmosphere were excellent. Meanwhile, in Comparative Example 3-1 indicating Ib/Ia < 1.1, the weight increase, a large Li elution amount, and agglomeration were observed after 24-hour storage, causing instability in the atmosphere. In Comparative Example 3-2 indicating 1.5 < Ib/Ia, the initial efficiency before storage was low.

Examples 4-1, 4-2 and Comparative Example 4-1

Referring to Table 4, the secondary battery was prepared under the same condition as that of Example 1-2 except that the value of I(24.8°)/Ia was changed, and existence or non-existence of the peak of $Li_2Si_2O_5$ was changed. Stability of the negative electrode active material in the atmosphere, and the initial efficiency of the secondary battery were evaluated.

[Table 4]

| SiOx(x=0.9), SiOx ratio : 20 mass%, $Li_2SiO_3$ contained, FWHM derived from $Li_2SiO_3$ (020) plane: 1.3, Ib/Ia: 1.3, I (28.4°)/Ia: 0.8, peak of Si (111) plane: none, I(29.9°)/Ia: 0.4, peak of $LiOH \cdot H_2O$: none, I(31.7°)/Ia: 0.3, silicon elution amount: 10 mass ppm, BET specific surface area: 1 $m^2$/g, D50 = 7 $\mu$m, D90/D10 = 2, carbon material thickness: 50 nm, phosphate: none | | | | | | | |
|---|---|---|---|---|---|---|---|
| Table 4 | I(24.8°)/ Ia | $Li_2Si_2O_5$ peak | Initial efficiency | After 24-hour storage | | | |
| | | | | Initial efficiency | Weight change | Li elution amount | Agglomeration |
| Example 1-2 | 0.3 | Not exist | 92% | 92% | 0% | 2% | Not agglomerated |
| Example 4-1 | 0.3 | Exist | 90% | 90% | 0% | 2% | Not agglomerated |
| Example 4-2 | 0.5 | Exist | 90% | 90% | 0% | 1% | Not agglomerated |
| Comparative Example 4-1 | 0.6 | Exist | 87% | 87% | 0% | 1% | Not agglomerated |

Referring to Table 4, when the range of I(24.8°)/Ia ≤ 0.5 was satisfied, the initial efficiency was excellent. Meanwhile, in Comparative Example 4-1 indicating 0.5 < I(24.8°)/Ia, the initial efficiency was largely deteriorated. Compared with cases in the existence of the peak of $Li_2Si_2O_5$, in the case of non-existence of the peak, the initial efficiency was improved.

Examples 5-1, 5-2 and Comparative Example 5-1

Referring to Table 5, the secondary battery was prepared under the same condition as that of Example 1-2 except that the value of I(28.4°)/Ia was changed, and existence or non-existence of the peak of Si was changed. Stability of the negative electrode active material in the atmosphere, and the initial efficiency of the secondary battery were evaluated.

[Table 5]

| SiOx(x=0.9), SiOx ratio : 20 mass%, $Li_2SiO_3$ contained, FWHM derived from $Li_2SiO_3$ (020) plane: 1.3, Ib/Ia: 1.3, I (24.8°)/Ia: 0.3, peak of $Li_2Si_2O_5$: none, I(29.9°)/Ia: 0.4, peak of $LiOH \cdot H_2O$: none, I(31.7°)/Ia: 0.3, silicon elution amount: 10 mass ppm, BET specific surface area: 1 $m^2$/g, D50 = 7 $\mu$m, D90/D10 = 2, carbon material thickness: 50 nm, phosphate: none | | | | | | | |
|---|---|---|---|---|---|---|---|
| Table 5 | I(28.4°)/ Ia | Si (111) plane peak | Initial efficiency | After 24-hour storage | | | |
| | | | | Initial efficiency | Weight change | Li elution amount | Agglomeration |
| Example 1-2 | 0.8 | Not exist | 92% | 92% | 0% | 2% | Not agglomerated |
| Example 5-1 | 0.8 | Exist | 91% | 91% | 1% | 4% | Not agglomerated |

(continued)

| SiOx(x=0.9), SiOx ratio : 20 mass%, $Li_2SiO_3$ contained, FWHM derived from $Li_2SiO_3$ (020) plane: 1.3, Ib/Ia: 1.3, I (24.8°)/Ia: 0.3, peak of $Li_2Si_2O_5$: none, I(29.9°)/Ia: 0.4, peak of $LiOH \cdot H_2O$: none, I(31.7°)/Ia: 0.3, silicon elution amount: 10 mass ppm, BET specific surface area: 1 $m^2$/g, D50 = 7 $\mu$m, D90/D10 = 2, carbon material thickness: 50 nm, phosphate: none | | | | | | | |
|---|---|---|---|---|---|---|---|
| Table 5 | I(28.4°)/ Ia | Si (111) plane peak | Initial efficiency | After 24-hour storage | | | |
| | | | | Initial efficiency | Weight change | Li elution amount | Agglomeration |
| Example 5-2 | 1.0 | Exist | 91% | 91% | 1% | 5% | Not agglomerated |
| Comparative Example 5-1 | 1.1 | Exist | 91% | 88% | 4% | 10% | Agglomerated |

Referring to Table 5, when the range of I(28.4°)/Ia ≤ 1.0 was satisfied, stability in the atmosphere and the initial efficiency were excellent. Meanwhile, in Comparative Example 5-1 indicating 1.0 < I(28.4°)/Ia, lowering of the initial efficiency, weight increase, Li elution, and agglomeration after 24-hour storage were observed, causing instability in the atmosphere. When the peak derived from Si (111) plane was not confirmed, excellent characteristics were yielded.

Examples 6-1 to 6-3

Referring to Table 6, the secondary battery was prepared under the same condition as that of Example 1-2 except that the value of I(29.9°)/Ia was changed, and existence or non-existence of the peak of $LiOH \cdot H_2O$ was changed. Stability of the negative electrode active material in the atmosphere, and the initial efficiency of the secondary battery were evaluated.

[Table 6]

| SiOx(x=0.9), SiOx ratio : 20 mass%, $Li_2SiO_3$ contained, FWHM derived from $Li_2SiO_3$ (020) plane: 1.3, Ib/Ia: 1.3, I (24.8°)/Ia: 0.3, peak of $Li_2Si_2O_5$: none, I(28.4°)/Ia: 0.8, peak of Si (111) plane: none, I(31.7°)/Ia: 0.3, silicon elution amount: 10 mass ppm, BET specific surface area: 1 $m^2$/g, D50 = 7 $\mu$m, D90/D10 = 2, carbon material thickness: 50 nm, phosphate: none | | | | | | | |
|---|---|---|---|---|---|---|---|
| Table 6 | I(29.9°)/ Ia | $LiOH \cdot H_2O$ peak | Initial efficiency | After 24-hour storage | | | |
| | | | | Initial efficiency | Weight change | Li elution amount | Agglomeration |
| Example 1-2 | 0.4 | Not exist | 92% | 92% | 0% | 2% | Not agglomerated |
| Example 6-1 | 0.4 | Exist | 91% | 91% | 1% | 3% | Not agglomerated |
| Example 6-2 | 0.7 | Exist | 90% | 89% | 1% | 3% | Not agglomerated |
| Example 6-3 | 0.8 | Exist | 90% | 89% | 2% | 3% | Agglomerated |

Referring to Table 6, when the range of I(29.9°)/Ia ≤ 0.7 was satisfied, stability in the atmosphere was especially excellent without agglomeration even after 24-hour storage. When the peak of $LiOH \cdot H_2O$ was not confirmed, the weight hardly changed even after 24-hour storage, and stability in the atmosphere was excellent.

Examples 7-1, 7-2

The secondary battery was prepared under the same condition as that of Example 1-2 except that the value of the I(31.7°)/Ia was changed as indicated by Table 7. Stability of the negative electrode active material in the atmosphere,

and the initial efficiency of the secondary battery were evaluated.

Table 7

| SiOx(x=0.9), SiOx ratio : 20 mass%, Li$_2$SiO$_3$ contained, FWHM derived from Li$_2$SiO$_3$ (020) plane: 1.3, Ib/Ia: 1.3, I (24.8°)/Ia: 0.3, peak of Li$_2$Si$_2$O$_5$: none, I(28.4°)/Ia: 0.8, peak of Si (111) plane: none, I(29.9°)/Ia: 0.4, peak of LiOH·H$_2$O: none, silicon elution amount: 10 mass ppm, BET specific surface area: 1 m$^2$/g, D50 = 7 μm, D90/D10 = 2, carbon material thickness: 50 nm, phosphate: none | | | | | | |
|---|---|---|---|---|---|---|
| Table 7 | I(31.7°)/ Ia | Initial efficiency | After 24-hour storage | | | |
| | | | Initial efficiency | Weight change | Li elution amount | Agglomeration |
| Example 1-2 | 0.3 | 92% | 92% | 0% | 2% | Not agglomerated |
| Example 7-1 | 0.7 | 91% | 91% | 0% | 2% | Not agglomerated |
| Example 7-2 | 0.8 | 90% | 89% | 1% | 5% | Not agglomerated |

Referring to Table 7, when the range of I(31.7°)/Ia ≤ 0.7 was satisfied, stability in the atmosphere was excellent with no weight change observed even after 24-hour storage.

Examples 8-1, 8-2

Referring to Table 8, the secondary battery was prepared under the same condition as that of Example 1-2 except the change in the silicon content in 25°C water having the negative electrode active material particles dispersed for one hour at a rate of 10 mass%. Stability of the negative electrode active material in the atmosphere and the initial efficiency of the secondary battery were evaluated.

[Table 8]

| SiOx (x=0.9), SiOx ratio : 20 mass%, Li$_2$SiO$_3$ contained, FWHM derived from Li$_2$SiO$_3$ (020) plane: 1.3, Ib/Ia: 1.3, I (24.8°)/Ia: 0.3, peak of Li$_2$Si$_2$O$_5$: none, I(28.4°)/Ia: 0.8, peak of Si (111) plane: none, I(29.9°)/Ia: 0.4, peak of LiOH·H$_2$O: none, I(31.7°)/Ia: 0.3, BET specific surface area: 1 m$^2$/g, D50 = 7 μm, D90/D10 = 2, carbon material thickness: 50 nm, phosphate: none | | | | | | |
|---|---|---|---|---|---|---|
| Table 8 | Silicon elution amount (ppm) | Initial efficiency | After 24-hour storage | | | |
| | | | Initial efficiency | Weight change | Li elution amount | Agglomeration |
| Example 1-2 | 10 | 92% | 92% | 0% | 2% | Not agglomerated |
| Example 8-1 | 50 | 91% | 91% | 0% | 3% | Not agglomerated |
| Example 8-2 | 60 | 91% | 91% | 2% | 5% | Not agglomerated |

The negative electrode active material particle was dispersed in 25°C water at the rate of 10 mass% for an hour. Thereafter, as shown in Table 8, when the silicon content of the water was equal to or lower than 50 ppm, stability in the atmosphere was excellent without change in the weight even after 24-hour storage.

Examples 9-1 to 9-3

The secondary battery was prepared under the same condition as that of Example 1-2 except that the BET specific surface area of the silicon compound particle was changed as shown in Table 9. Stability of the negative electrode active material in the atmosphere, and the initial efficiency of the secondary battery were evaluated.

[Table 9]

| SiOx(x=0.9), SiOx ratio : 20 mass%, $Li_2SiO_3$ contained, FWHM derived from $Li_2SiO_3$ (020) plane: 1.3, Ib/Ia: 1.3, I (24.8°)/Ia: 0.3, peak of $Li_2Si_2O_5$: none, I(28.4°)/Ia: 0.8, peak of Si (111) plane: none, I(29.9°)/Ia: 0.4, peak of $LiOH·H_2O$: none, I(31.7°)/Ia: 0.3, silicon elution amount: 10 mass ppm, D50 = 7 μm, D90/D10 = 2, carbon material thickness: 50 nm, phosphate: none | | | | | | |
|---|---|---|---|---|---|---|
| Table 9 | BET specific surface area m²/g | Initial efficiency | After 24-hour storage | | | |
| | | | Initial efficiency | Weight change | Li elution amount | Agglomeration |
| Example 1-2 | 1 | 92% | 92% | 0% | 2% | Not agglomerated |
| Example 9-1 | 0.5 | 89% | 89% | 0% | 3% | Not agglomerated |
| Example 9-2 | 3 | 91% | 91% | 0% | 3% | Not agglomerated |
| Example 9-3 | 4 | 91% | 91% | 2% | 5% | Not agglomerated |

When the BET specific surface area of the negative electrode active material particle was within the range from 1 m²/g to 3 m²/g inclusive, stability in the atmosphere and the initial efficiency were excellent. In Example 9-1 where the BET specific surface area was smaller than 1 m²/g, the initial efficiency was slightly lowered. In Example 9-3 where the BET specific surface area was larger than 3 m²/g, the weight increase was observed after 24-hour storage.

Examples 10-1 to 10-6

The second battery was prepared under the same condition as that of Example 1-2 except that the median diameter of the silicon-based active material particle, and the D90/D10 were adjusted. Stability of the negative electrode active material in the atmosphere, and the initial efficiency of the secondary battery were evaluated.

[Table 10]

| SiOx (x=0.9), SiOx ratio: 20 mass%, $Li_2SiO_3$ contained, FWHM derived from $Li_2SiO_3$ (020) plane: 1.3, Ib/Ia: 1.3, I (24.8°)/Ia: 0.3, peak of $Li_2Si_2O_5$: none, I(28.4°)/Ia: 0.8, peak of Si (111) plane: none, I(29.9°)/Ia: 0.4, peak of $LiOH·H_2O$: none, I(31.7°)/Ia: 0.3, silicon elution amount: 10 mass ppm, BET specific surface area: 1 m²/g, carbon material thickness: 50 nm, phosphate: none | | | | | | | |
|---|---|---|---|---|---|---|---|
| Table 10 | D50 (μm) | D90/D10 | Initial efficiency | After 24-hour storage | | | |
| | | | | Initial efficiency | Weight change | Li elution amount | Agglomeration |
| Example 1-2 | 7 | 2 | 92% | 92% | 0% | 2% | Not agglomerated |
| Example 10-1 | 3 | 2 | 90% | 89% | 2% | 5% | Not agglomerated |
| Example 10-2 | 4 | 2 | 91% | 91% | 0% | 3% | Not agglomerated |
| Example 10-3 | 15 | 2 | 91% | 91% | 1% | 4% | Not agglomerated |
| Example 10-4 | 17 | 2 | 90% | 89% | 2% | 5% | Not agglomerated |
| Example 10-5 | 7 | 3 | 92% | 92% | 0% | 3% | Not agglomerated |

(continued)

| SiOx (x=0.9), SiOx ratio: 20 mass%, $Li_2SiO_3$ contained, FWHM derived from $Li_2SiO_3$ (020) plane: 1.3, Ib/Ia: 1.3, I (24.8°)/Ia: 0.3, peak of $Li_2Si_2O_5$: none, I(28.4°)/Ia: 0.8, peak of Si (111) plane: none, I(29.9°)/Ia: 0.4, peak of $LiOH \cdot H_2O$: none, I(31.7°)/Ia: 0.3, silicon elution amount: 10 mass ppm, BET specific surface area: 1 $m^2$/g, carbon material thickness: 50 nm, phosphate: none | | | | | | | |
|---|---|---|---|---|---|---|---|
| Table 10 | D50 ($\mu$m) | D90/D10 | Initial efficiency | After 24-hour storage | | | |
| | | | | Initial efficiency | Weight change | Li elution amount | Agglomeration |
| Example 10-6 | 7 | 4 | 90% | 89% | 0% | 3% | Not agglomerated |

Referring to Table 10, when the median diameter was in the range from 4.0 um to 15 um inclusive, and the D90/D10 was equal to or lower than 3, stability in the atmosphere and the initial efficiency were excellent. In Example 10-1 where the median diameter was smaller than 4.0 um, and in Example 10-4 where the median diameter was larger than 15 um, the initial efficiency was slightly lowered after 24-hour storage. In Example 10-6 where the D90/D10 was higher than 3, the initial efficiency was slightly lowered after 24-hour storage.

Example 11-1

The second battery was prepared under the same condition as that of the example 1-2 except that the carbon material was not coated on the surface of the silicon-based active material particle. The initial efficiency and stability of the slurry were evaluated.

Examples 11-2 to 11-4

The secondary battery was prepared under the same condition as that of Example 1-2 except that the average thickness of the carbon material coated on the surface of the silicon-based active material particle was changed as shown in Table 11. Stability of the negative electrode active material in the atmosphere, and the initial efficiency of the secondary battery were evaluated. The average thickness of the carbon material was adjusted by changing the CVD condition.

Table 11

| SiOx (x=0.9), SiOx ratio : 20 mass%, $Li_2SiO_3$ contained, FWHM derived from $Li_2SiO_3$ (020) plane: 1.3, Ib/Ia: 1.3, I (24.8°)/Ia: 0.3, peak of $Li_2Si_2O_5$: none, I(28.4°)/Ia: 0.8, peak of Si (111) plane: none, I(29.9°)/Ia: 0.4, peak of $LiOH \cdot H_2O$: none, I(31.7°)/Ia: 0.3, silicon elution amount: 10 mass ppm, BET specific surface area: 1 $m^2$/g, D50 = 7 $\mu$m, D90/D10 = 2, phosphate: none | | | | | | |
|---|---|---|---|---|---|---|
| Table 11 | Carbon material thickness (nm) | Initial efficiency | After 24-hour storage | | | |
| | | | Initial efficiency | Weight change | Li elution amount | Agglomeration |
| Example 1-2 | 50 | 92% | 92% | 0% | 2% | Not agglomerated |
| Example 11-1 | 0 | 90% | 89% | 2% | 5% | Not agglomerated |
| Example 11-2 | 10 | 92% | 92% | 1% | 4% | Not agglomerated |
| Example 11-3 | 100 | 92% | 92% | 0% | 1% | Not agglomerated |
| Example 11-4 | 120 | 90% | 90% | 0% | 1% | Not agglomerated |

Referring to Table 11, when the average thickness of the carbon material was within the range from 10 nm to 100 nm inclusive, stability in the atmosphere, and the initial efficiency were excellent. In Example 11-1 where no carbon material was contained in the surface, the initial efficiency was slightly lowered after 24-hour storage. In Example 11-4 where the carbon material thickness was larger than 100 nm, the initial efficiency before storage was slightly low.

Examples 12-1 to 12-3

The secondary battery was prepared under the same condition as that of Example 1-2 except that the phosphate was contained in the surface of the silicon-based active material particle. Stability of the negative electrode active material in the atmosphere, and the initial efficiency of the secondary battery were evaluated. The phosphate was blended at 1 wt.% to the negative electrode active material particle, and adhered to the surface of the negative electrode active material particle by shear blending.

[Table 12]

SiOx (x=0.9), SiOx ratio : 20 mass%, $Li_2SiO_3$ contained, FWHM derived from $Li_2SiO_3$ (020) plane: 1.3, Ib/Ia: 1.3, I (24.8°)/Ia: 0.3, peak of $Li_2Si_2O_5$: none, I(28.4°)/Ia: 0.8, peak of Si (111) plane: none, I(29.9°)/Ia: 0.4, peak of $LiOH\cdot H_2O$: none, I(31.7°)/Ia: 0.3, silicon elution amount: 10 mass ppm, BET specific surface area: 1 $m^2$/g, D50 = 7 $\mu$m, D90/D10 = 2, carbon material thickness: 50 nm

| Table 12 | Kind of phosphate | Initial efficiency | After 24-hour storage | | | |
| --- | --- | --- | --- | --- | --- | --- |
| | | | Initial efficiency | Weight change | Li elution amount | Agglomeration |
| Example 1-2 | None | 92% | 92% | 0% | 2% | Not agglomerated |
| Example 12-1 | Sodium phosphate | 92% | 92% | 0% | 0% | Not agglomerated |
| Example 12-2 | Magnesium phosphate | 92% | 92% | 0% | 0% | Not agglomerated |
| Example 12-3 | Aluminum phosphate | 92% | 92% | 0% | 0% | Not agglomerated |

Referring to Table 12, when the phosphate was contained in the surface, the Li elution amount was decreased after 24-hour storage, and stability in the atmosphere was improved.
It should be noted that the present invention is not limited to the above-described embodiments. The embodiments are just examples, and any examples that substantially have the same feature and demonstrate the same functions and effects as those in the technical concept disclosed in claims of the present invention are included in the technical scope of the present invention.

Claims

1. A negative electrode active material for a non-aqueous electrolyte secondary battery, the negative electrode active material comprising a negative electrode active material particle, wherein

the negative electrode active material particle contains a silicon compound particle containing a silicon compound ($SiO_x$: $0.8 \leq x \leq 1.2$),
the silicon compound particle contains $Li_2SiO_3$;
when measuring the negative electrode active material particle by X-ray diffraction using Cu-K$\alpha$ radiation, a half-value width of a peak derived from a $Li_2SiO_3$ (020) plane, obtained by the X-ray diffraction is in a range from 1.1° to 1.5° inclusive; and
a spectrum obtained by the X-ray diffraction satisfies all formulae (1) to (3),

$$1.1 \leq Ib/Ia \leq 1.5 \qquad (1)$$

$$I(24.8°)/Ia \leq 0.5 \qquad (2)$$

$$I(28.4°)/Ia \leq 1.0 \qquad (3)$$

where Ia denotes intensity of a peak derived from the $Li_2SiO_3$ (020) plane, Ib denotes intensity of a peak derived from a $Li_2SiO_3$ (111) plane, I(24.8°) denotes intensity at $2\theta = 24.8°$, and I(28.4°) denotes intensity at $2\theta = 28.4°$.

2. The negative electrode active material for a non-aqueous electrolyte secondary battery according to claim 1, wherein the spectrum obtained by the X-ray diffraction does not have a peak derived from $Li_2Si_2O_5$ at around $2\theta = 24.8°$.

3. The negative electrode active material for a non-aqueous electrolyte secondary battery according to claim 1, wherein the spectrum obtained by the X-ray diffraction does not have a peak derived from a Si (111) plane at around $2\theta = 28.4°$.

4. The negative electrode active material for a non-aqueous electrolyte secondary battery according to any one of claims 1 to 3, wherein the spectrum obtained by the X-ray diffraction satisfies a formula of $1.2 \leq Ib/Ia \leq 1.3$.

5. The negative electrode active material for a non-aqueous electrolyte secondary battery according to any one of claims 1 to 4, wherein a half-value width of a peak derived from the $Li_2SiO_3$ (020) plane is in a range from 1.2° to 1.3° inclusive.

6. The negative electrode active material for a non-aqueous electrolyte secondary battery according to any one of claims 1 to 5, wherein intensity $I(29.9°)$ of the spectrum obtained by the X-ray diffraction, derived from $LiOH \cdot H_2O$ at $2\theta = 29.9°$ satisfies a formula of $I(29.9°)/Ia \leq 0.7$.

7. The negative electrode active material for a non-aqueous electrolyte secondary battery according to claim 6, wherein the spectrum obtained by the X-ray diffraction does not have a peak derived from the $LiOH \cdot H_2O$ at around $2\theta = 29.9°$.

8. The negative electrode active material for a non-aqueous electrolyte secondary battery according to any one of claims 1 to 7, wherein intensity $I(31.7°)$ of the spectrum obtained by the X-ray diffraction at $2\theta = 31.7°$ satisfies a formula of $I(31.7°)/Ia \leq 0.7$.

9. The negative electrode active material for a non-aqueous electrolyte secondary battery according to any one of claims 1 to 8, wherein a content of silicon in water at 25°C, in which the negative electrode active material particle has been dispersed at a rate of 10 mass% for one hour is equal to or less than 50 mass ppm.

10. The negative electrode active material for a non-aqueous electrolyte secondary battery according to any one of claims 1 to 9, wherein a BET specific surface area of the negative electrode active material particle is in a range from 1 m²/g to 3 m²/g inclusive.

11. The negative electrode active material for a non-aqueous electrolyte secondary battery according to any one of claims 1 to 10, wherein a median diameter of the negative electrode active material particle is in a range from 4.0 um to 15 um inclusive, and a ratio (D90/D10) between 10% accumulation diameter (D10) and 90% accumulation diameter (D90) is equal to or lower than 3.

12. The negative electrode active material for a non-aqueous electrolyte secondary battery according to any one of claims 1 to 11, wherein

   a surface layer of the negative electrode active material particle contains a carbon material, and
   an average thickness of the carbon material is in a range from 10 nm to 100 nm inclusive.

13. The negative electrode active material for a non-aqueous electrolyte secondary battery according to any one of claims 1 to 12, wherein a surface layer of the negative electrode active material particle contains a phosphate.

14. A non-aqueous electrolyte secondary battery comprising the negative electrode active material for a non-aqueous electrolyte secondary battery according to any one of claims 1 to 13.

15. A method for manufacturing a negative electrode active material for a non-aqueous electrolyte secondary battery, the negative electrode active material comprising a negative electrode active material particle which contains a silicon compound particle, the method comprising steps of:

preparing the silicon compound particle containing a silicon compound ($SiO_x$: $0.8 \leq x \leq 1.2$), and inserting Li into the silicon compound particle to allow the silicon compound particle to contain $Li_2SiO_3$, wherein the negative electrode active material particle is prepared by these steps, when measuring the negative electrode active material particle by X-ray diffraction using Cu-K$\alpha$ radiation, a half-value width of a peak derived from a $Li_2SiO_3$ (020) plane obtained by the X-ray diffraction is in a range from 1.1° to 1.5° inclusive, the method further comprises a step of selecting the negative electrode active material particle which has a spectrum obtained by the X-ray diffraction satisfying all formulae (1) to (3),

$$1.1 \leq Ib/Ia \leq 1.5 \qquad (1)$$

$$I(24.8°)/Ia \leq 0.5 \qquad (2)$$

$$I(28.4°)/Ia \leq 1.0 \qquad (3)$$

where Ia denotes intensity of a peak derived from a $Li_2SiO_3$ (020) plane, Ib denotes intensity of a peak derived from a $Li_2SiO_3$ (111) plane, 1(24.8°) denotes intensity at 2$\theta$ = 24.8°, and I(28.4°) denotes intensity at 2$\theta$ = 28.4°, and the selected negative electrode active material particle is used for manufacturing the negative electrode active material for a non-aqueous electrolyte secondary battery.

[FIG. 1]

$2\theta(°)$

[FIG. 2]

[FIG. 3]

## INTERNATIONAL SEARCH REPORT

| International application No. |
| --- |
| **PCT/JP2022/003917** |

| | |
| --- | --- |
| **A. CLASSIFICATION OF SUBJECT MATTER** | |
| *H01M 4/36*(2006.01)i; *H01M 4/48*(2010.01)i; *H01M 4/58*(2010.01)i<br>FI: H01M4/58; H01M4/48; H01M4/36 E; H01M4/36 C | |
| According to International Patent Classification (IPC) or to both national classification and IPC | |

**B. FIELDS SEARCHED**

Minimum documentation searched (classification system followed by classification symbols)

H01M4/36; H01M4/48; H01M4/58

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2017-195015 A (SHIN ETSU CHEM. CO., LTD.) 26 October 2017 (2017-10-26) | 1-15 |
| A | JP 2020-113495 A (SHIN ETSU CHEM. CO., LTD.) 27 July 2020 (2020-07-27) | 1-15 |
| P, A | WO 2021/153077 A1 (PANASONIC INTELLECTUAL PROPERTY MANAGEMENT CO., LTD.) 05 August 2021 (2021-08-05) | 1-15 |

| ☐ Further documents are listed in the continuation of Box C. | ☑ See patent family annex. |
| --- | --- |

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **04 April 2022** | **19 April 2022** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

### INTERNATIONAL SEARCH REPORT
### Information on patent family members

International application No.

**PCT/JP2022/003917**

| Patent document cited in search report | | | Publication date (day/month/year) | Patent family member(s) | | | Publication date (day/month/year) |
|---|---|---|---|---|---|---|---|
| JP | 2017-195015 | A | 26 October 2017 | US | 2019/0148728 | A1 | |
| | | | | WO | 2017/183286 | A1 | |
| | | | | EP | 3447829 | A1 | |
| | | | | CN | 109075331 | A | |
| | | | | KR | 10-2018-0134898 | A | |
| JP | 2020-113495 | A | 27 July 2020 | WO | 2020/149133 | A1 | |
| WO | 2021/153077 | A1 | 05 August 2021 | (Family: none) | | | |

Form PCT/ISA/210 (patent family annex) (January 2015)

**REFERENCES CITED IN THE DESCRIPTION**

**Patent documents cited in the description**

- JP 2001185127 A
- JP 2002042806 A
- JP 2006164954 A
- JP 2006114454 A
- JP 2009070825 A
- JP 2008282819 A
- JP 2008251369 A
- JP 2008177346 A
- JP 2007234255 A
- JP 2009212074 A
- JP 2009205950 A
- JP H06325765 A